Europäisches Patentamt

European Patent Office

Office européen des brevets

(11) Numéro de publication : **0 440 128 B1**

(12) **FASCICULE DE BREVET EUROPEEN**

(45) Date de publication du fascicule du brevet :
15.03.95 Bulletin 95/11

(51) Int. Cl.⁶ : **H04J 3/16, H04J 3/07**

(21) Numéro de dépôt : **91101055.1**

(22) Date de dépôt : **28.01.91**

(54) **Interface de restructuration de trames pour trains numériques multiplexés par multiplexage temporel d'affluents numériques à différents débits.**

(30) Priorité : **29.01.90 FR 9000991**

(43) Date de publication de la demande :
**07.08.91 Bulletin 91/32**

(45) Mention de la délivrance du brevet :
**15.03.95 Bulletin 95/11**

(84) Etats contractants désignés :
**AT BE CH DE ES FR GB IT LI NL SE**

(56) Documents cités :
**EP-A- 0 320 856**
**NTZ, vol. 41, no. 10, 1988, pages 570-574, Berlin, DE; W. EHRLICH et al.: "Die neue synchrone digitale Hierarchie"**
**PROCEEDINGS IEEE GLOBAL TELECOMMU-NICATIONS CONFERENCE & EXHIBITION, Hollywood, Florida, 28 novembre - 1 décembre 1988, vol. 1, pages 118-124, IEEE, New York, US; K. ASATANI: "Network node interface for new synchronous digital networks - concepts and standardization"**

(73) Titulaire : **ALCATEL CIT**
**12 Rue de la Baume**
**F-75008 Paris (FR)**

(72) Inventeur : **Guinand, Jacques**
**1 bis, rue de la République**
**F-78470 Saint Remy Les Chevreuse (FR)**
Inventeur : **Ferrant, Jean-Loup**
**114, rue de Bellevue**
**F-92100 Boulogne Billancourt (FR)**
Inventeur : **Faye, Jean-Claude**
**7 impasse de la Croix de Fer**
**F-91190 Gif sur Yvette (FR)**
Inventeur : **Roux, Hervé**
**49, rue Carnot**
**F-91300 Massy (FR)**

(74) Mandataire : **Weinmiller, Jürgen et al**
**Lennéstrasse 9**
**Postfach 24**
**D-82336 Feldafing (DE)**

**Description**

La présente invention concerne les télécommunications numériques. Elle concerne plus particulièrement les systèmes de télécommunications numériques dans lesquels la transmission se fait sous la forme de trains numériques multiplexés obtenus par multiplexage temporel synchrone d'affluents numériques à différents débits suivant une hiérarchie de multiplexage synchrone telle que celle décrite dans les Recommandations G707, G708, G709 du CCITT.

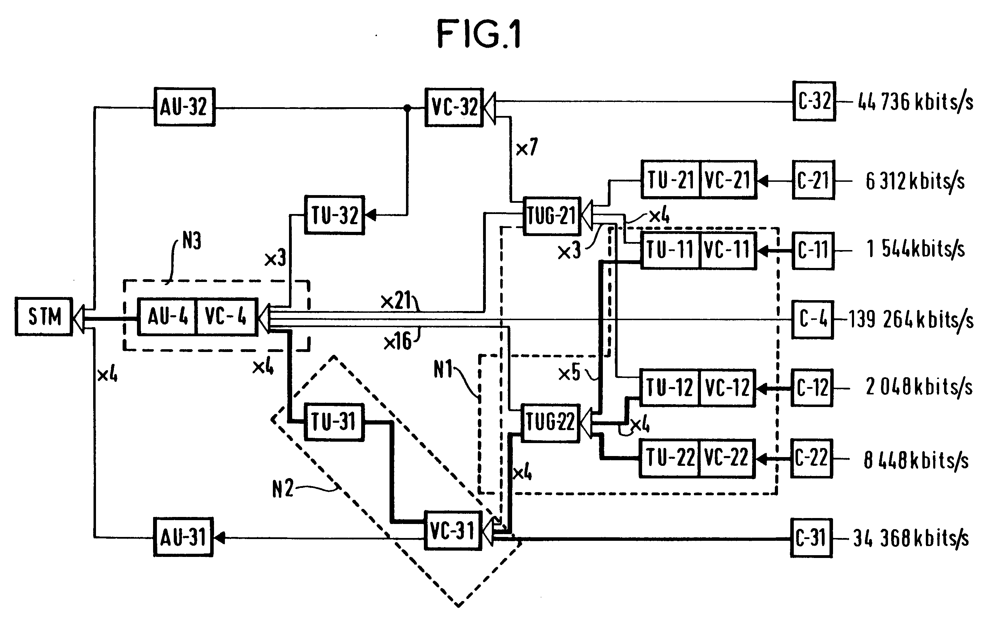

Le principe d'une telle hiérarchie de multiplexage est rappelé de façon schématique sur la figure 1. Les différents débits multiplexables par cette hiérarchie sont les débits 2 048 kbit/s - 8 448 kbit/s- 34 368 kbit/s - 1 544 kbit/s - 6 312 kbit/s - 44 736 kbit/s et 139 264 kbit/s normalisés par le CCITT et rappelés sur la partie droite de cette figure.

Cette hiérarchie de multiplexage présente plusieurs structures de multiplexage possibles suivant le débit des affluents à multiplexer pour une application considérée, et chaque structure de multiplexage, telle que celle repérée en traits renforcés sur cette figure, correspondant à des affluents à multiplexer de débits 1 544 kbit/s - 2 048 kbit/s - 8 448 kbit/s et 34 368 kbit/s, comporte plusieurs niveaux hiérarchiques, repérés N1, N2, N3 dans l'exemple considéré, en allant de la partie droite de la figure vers la partie gauche, dans le sens de formation des trames à partir des différents affluents.

Aux différents niveaux hiérarchiques d'une structure de multiplexage sont susceptibles d'être introduits des affluents et sont constituées des entités appelées ci-après conteneurs et des entités appelées ci-après unités de multiplexage.

On notera que par la suite, les termes conteneur et unité de multiplexage seront utilisés aussi bien pour désigner de façon générique des suites d'entités que pour désigner des éléments individuels de ces suites.

Les unités de multiplexage constituées à un niveau hiérarchique donné, et référencées TU ou AU (TU11, TU12, TU22, pour le niveau N1, TU31 pour le niveau N2 et AU4 pour le niveau N3 dans l'exemple considéré) sont formées par adjonction, aux conteneurs constitués au même niveau hiérarchique , de signaux d'indexation et de justification de ces conteneurs par rapport à ces unités de multiplexage.

Les conteneurs constitués à un niveau hiérarchique donné, et référencés VC (VC11, VC12, VC22, pour le niveau N1, VC31 pour le niveau N2, et VC4 pour le niveau N3 dans l'exemple considéré) sont formés par adjonction de signaux de service, suivant le cas soit à des signaux multiplex issus du multiplexage de "n" unités de mutliplexage constituées à un niveau hiérarchique inférieur, soit à des signaux, dits signaux d'information, prélevés sur un affluent introduit au niveau considéré, référencé C (C11, C12, C22 pour le niveau N1, et C31 pour le niveau N2, dans l'exemple considéré).

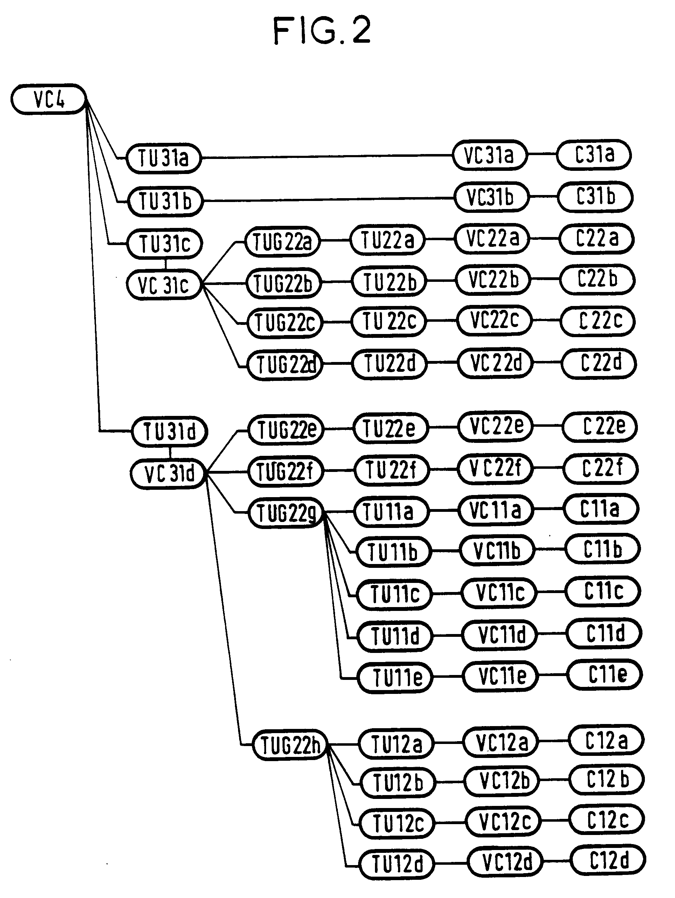

Le schéma de formation des différents conteneurs ou unités de multiplexage dans le cas de la structure de multiplexage considérée précédemment à titre d'exemple est indiqué sur la figure 2. Un conteneur VC4, constitué au niveau N3, est obtenu par multiplexage de signaux issus de quatre unités de multiplexage TU31a, TU31b, TU31c, TU31d, constituées au niveau N2.

Deux de ces unités de multiplexage, TU31a et TU31b, sont formées à partir de conteneurs VC31a et VC31b formés eux mêmes à partir d'affluents C31a et C31b à 34 358 kbit/s, introduits au niveau N2.

Les deux autres unités de multiplexage, TU31c et TU31d, sont formées à partir de conteneurs VC31c et VC31d formés eux-mêmes d'unités de multiplexage particulières, référencées TUG22, constituées au niveau N1, et opérant uniquement un multiplexage d'unités de multiplexage déjà constituées à ce même niveau hiérarchique, sans adjonction de signaux d'indexation et de justification.

Le conteneur VC31c est plus précisement formé à partir de quatre unités de multiplexage TUG22a, TUG22b, TUG22c, TUG22d, formées elles-mêmes à partir de quatre unités de multiplexage TU22a, TU22b, TU22c, TU22d, formées elles-mêmes à partir de quatre conteneurs VC22a, VC22b, VC22c, VC22d, formés à leur tour à partir de quatre affluents C22a, C22b, C22c, C22d à 8 448 kbit/s. Le conteneur VC31d est formé par multiplexage de quatre unités de multiplexage TUG22e, TUG22f, TUG22g, TUG22 h, dont les deux premières, TUG22e et TUG22f, sont formées comme les unités de multiplexage TUG22a, TUG22b, TUG22c, TUG22d, à partir d'affluents C22e et C22f à 8 448 kbit/s.

La troisième unité de multiplexage TUG22g est formée à partir de cinq unités de multiplexage TU 11a, TU11b, TU11c, TU11d, TU11e, formées respectivement à partir de conteneurs VC11a, VC11b, VC11c, VC11d, VC11e, formés à leur tour respectivement à partir de cinq affluents à 1 544 kbit/s : C11a, C11b, C11c, C11d, C11e.

La quatrième unité de multiplexage TUG22 h est formée à partir de quatre unités de multiplexage TU12a, TU12 b, TU12c, TU12d formées respectivement à partir de conteneurs VC12a, VC12b, VC12c, VC12d, formés à leur tour respectivement à partir d'affluents à 2 048 kbit/s: C12a, C12b, C12c, C12d.

L'unité de multiplexage constituée au niveau hiérarchique le plus élevé, c'est-à-dire l'unité de multiplexage AU4 dans l'exemple considéré, est obtenue par adjonction de signaux de justification et d'indexation au conteneur constitué à ce niveau, c'est-à-dire au conteneur VC4 dans l'exemple considéré.

Les trames résultantes STM sont obtenues par adjonction de signaux de service aux unités de multiplexage constituées au niveau hiérarchique le plus élevé.

La diversité de débits des affluents formant les trames résultant de ce multiplexage hiérarchique synchrone se traduit par le fait que les affluents ont à l'intérieur des trames ainsi obtenues, des périodes de répétition de leurs signaux d'information différentes, d'autant plus faibles pour un affluent donné que le débit de cet affluent est élevé. Cette période de répétition est obtenue en faisant le produit des facteurs "n" de multiplexage rencontrés tout au long de la structure de multiplexage pour l'affluent considéré. A titre d'exemple la période de répétition de l'affluent C12 à 2048 kbit/s est de 64, celle des affluents 011 à 1 544 kbit/s de 80, celle des affluents C22 à 8448 kbit/s de 16 et celle des affluents C31 à 34 368 kbit/s de 4.

Les signaux de justification adjoints à des conteneurs à un niveau hiérarchique donné pour constituer des unités de multiplexage permettent de réaliser une adaptation du rythme des signaux formant ces conteneurs au rythme d'une horloge locale utilisée à ce niveau hiérarchique, par la technique connue de justification positive-négative selon laquelle un signal d'un conteneur prend de temps à autre la place d'un signal de bourrage prévu à cet effet dans l'unité de multiplexage formée à partir de ce conteneur lorsque le premier de ces rythmes est supérieur au second, et un signal de bourrage prend de temps à autre la place d'un signal d'un conteneur lorsque le premier de ces rythmes est inférieur au second.

Les signaux d'indexation élaborés aux différents niveaux hiérarchiques permettent de répercuter sur des conteneurs de niveaux inférieurs les opérations de justification effectuées sur des conteneurs de niveaux supérieurs, pour tenir compte du multiplexage synchrone opéré aux différents niveaux de la hiérarchie de multiplexage. Ils permettent plus précisement de positionner chaque conteneur constitué à un niveau hiérarchique par rapport à l'unité de multiplexage correspondante constituée à ce niveau, en tenant compte des opérations de justification effectuées sur ce conteneur pour une trame donnée et pour des trames antérieures. Ils ont de plus une position déterminée à l'intérieur de l'unité de multiplexage correspondante, et par suite à l'intérieur du conteneur correspondant constitué au niveau hiérarchique immédiatement supérieur, ce qui permet par recours successif aux signaux d'indexation élaborés aux différents niveaux hiérarchiques rencontrés en parcourant la structure de multiplexage dans le sens inverse du sens de formation des trames à partir des affluents, de localiser le conteneur considéré à l'intérieur des trames.

Les signaux de service adjoints aux unités de multiplexage constituées au niveau hiérarchique le plus élevé afin de constituer les trames sont localisés à des emplacements répétitifs à l'intérieur de ces trames, d'où une représentation habituelle de ces trames sous forme de tableaux, ou matrices, ayant en pratique 9 lignes numérotées de 0 à 8, et 270 colonnes numérotées de 0 à 269, et se lisant de gauche à droite et de haut en bas, c'est-à-dire ligne par ligne, chaque intersection entre une ligne et une colonne correspondant à un signal (pouvant être un signal de service, un signal de justification, un signal d'indexation, ou un signal d'information) constitué en pratique par un octet.

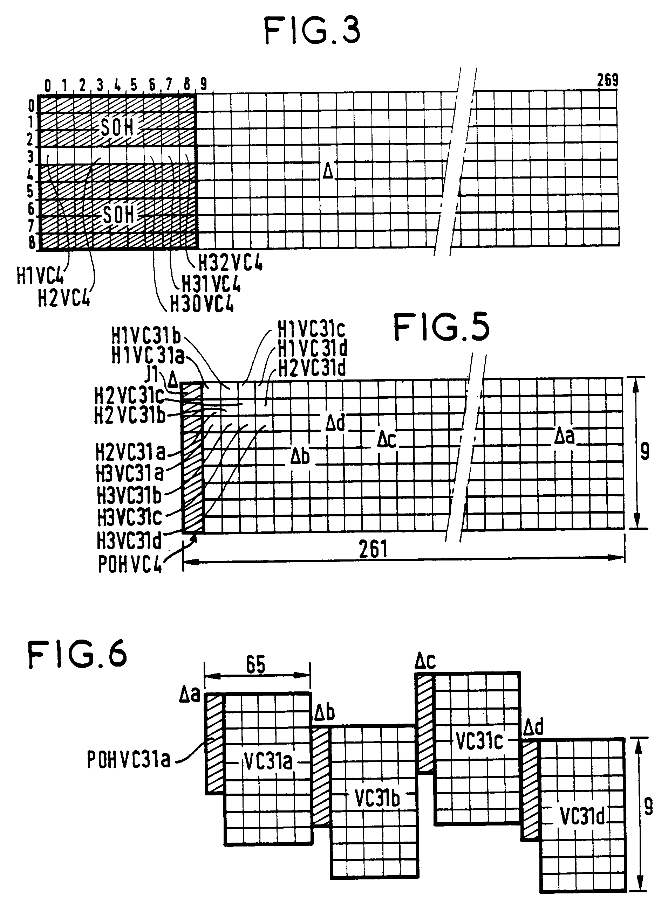

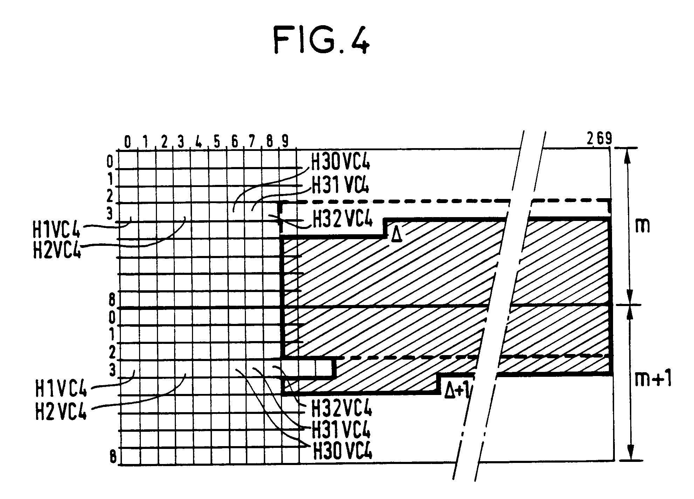

La figure 3 représente une telle trame dans le cas de l'exemple considéré précédemment où le niveau hiérarchique le plus élevé est le niveau N3.

La zone hachurée sur la figure 3 contient les signaux de service, référencés SOH, adjoints à une unité de multiplexage AU4 pour constituer une trame, et la zone non hachurée contient une telle unité de multiplexage AU4.

Une unité de multiplexage AU4 est constituée d'un conteneur VC4 auquel sont adjoints des signaux d'indexation, référencés H1VC4 et H2VC4, qui sont toujours présents et des signaux de justification dont les uns, référencés H30VC4, H31VC4 et H32VC4 sont toujours présents sauf en cas de justification négative et dont d'autres, non référencés, ne sont présents qu'en cas de justification positive. Les signaux d'indexation H1VC4 et H2VC4 et, lorsqu'ils ne sont pas absents les signaux de justification H30VC4, H31VC4 et H32VC4 occupent respectivement les colonnes 0, 3, 6, 7, ; et 8 de la ligne 3; les signaux de justification positive occupent quant à eux, lorsqu'ils sont présents, les colonnes 9, 10, 11 de la ligne 3.

Les signaux d'indexation H1VC4 et H2VC4 permettent de localiser un conteneur VC4 à l'intérieur d'une unité de multiplexage AU4, et donc à l'intérieur d'une trame, en pratique par la localisation du premier octet de ce conteneur VC4, repéré $\Delta$ sur la figure 3a.

Le positionnement d'un conteneur VC4 à l'intérieur d'une trame "m" donnée et de la trame "m+1" suivante, sur laquelle il déborde par l'effet même des signaux d'indexation ainsi que par la localisation de ces signaux d'indexation en ligne 3 des trames (comme montré sur la figure 3) est illustré sur la figure 4, l'espace occupé par le conteneur VC4 étant repéré par des hachures. Le contenu d'un conteneur VC4 est représenté sur la figure 5, sous la forme d'un tableau de 9 lignes et de 261 colonnes se lisant également de gauche à droite et de haut en bas, et s'insérant parfaitement, en l'absence de justifications du conteneur VC4 par rapport à l'unité de multiplexage AU4, dans le cadre représenté en pointillés sur la figure 4, formé des octets situés en colonnes 9 à 269 des lignes 3 à 8 de la trame "m" et 0 à 2 de la trame "m+1".

En pratique, la forme du conteneur VC4 s'éloigne de cette forme nominale, du fait des justifications, positives ou négatives, opérées sur ce conteneur pour des trames antérieures et jusqu'à la trame "m" en cours, qui se traduisent par un décalage du premier octet du conteneur VC4 (indiqué par les octets H1VC4 et H2VC4 de la trame "m") et du fait d'une éventuelle justification opérée sur ce conteneur pour la trame "m+1". Dans la figure 4, on a illustré le cas où une justification positive est opérée sur ce conteneur pour la trame "m+1", cette justification, indiquée par les octets H1VC4 et H2VC4 de la trame "m+1", se traduisant par une insertion d'octets de bourrage en colonnes 9 à 11 de la ligne 3 de la trame"m+1".

Dans le cas d'une justification négative opérée pour la trame "m+1", toujours indiquée par les octets H1VC4 et H2VC4 de la trame "m+1", le conteneur VC4 n'aurait pas, comme représenté à la figure 4, une partie en retrait de trois octets à la ligne 3 de la trame "m+1" mais présenterait sur cette même ligne une avancée de trois octets au niveau des colonnes 6 à 8, cette justification négative s'effectuant en mettant des octets du VC4 à l'emplacement des octets H30VC4, H31VC4 et H32VC4 d'opportunité de justification négative de la trame "m+1".

Le conteneur VC4 considéré est formé par multiplexage de quatre unités de multiplexage TU31a, TU31b, TU31c, TU31d occupant la zone non hachurée sur la figure 5, et par adjonction de signaux de service, référencés P0HVC4, occupant la zone hachurée c'est-à-dire la première colonne, ou colonne de gauche, du tableau à 9 lignes et 261 colonnes. Chaque unité de multiplexage, TU31a par exemple, est elle-même formée par adjonction à un conteneur, VC31a dans cet exemple, de signaux d'indexation , référencés H1VC31a et H2VC31a et de signaux de justification dont l'un, référencé H3VC31a et prévu pour donner une opportunité de justification négative, est toujours présent sauf en cas de justification négative et dont un autre, non représenté, n'est présent qu'en cas de justification positive. Les signaux d'indexation et de justification des quatre conteneurs VC31 sont de position déterminée par rapport au premier octet du conteneur VC4 ce qui permet, une fois celui-ci localisé, de les localiser, et donc de localiser ces conteneurs, en pratique par la localisation de l'emplacement de leur premier octet, référencé respectivement $\Delta a$, $\Delta b$, $\Delta c$, $\Delta d$.

Les différents conteneurs VC31 ( VC31a, VC31b, VC31c, VC31d) sont de même représentés sur la figure 6, toujours dans le cadre de la structure de multiplexage considérée à titre d'exemple, chacun d'eux étant formé par adjonction de signaux de service, référencés respectivement P0HVC31a, P0HVC31b, P0HVC31c, P0HVC31d soit à des unités de multiplexage TUG22 multiplexées, soit à des signaux issus d'un affluent C31, suivant le cas. Chacun des conteneurs VC31 peut être représenté, ainsi qu'illustré à la figure 6, sous forme d'un tableau se lisant de gauche à droite et de haut en bas, formé de 9 lignes et 65 colonnes (c'est-à-dire 260/4) dont la première, qui contient les signaux de service, est incomplète, le nombre de signaux nécessaires pour la compléter étant égal au nombre de signaux d'indexation et de justification adjoints à chaque conteneur VC31 en l'absence de justification positive et de justification négative pour constituer l'unité de multiplexage TU31 correspondante.

Il serait possible de représenter de façon similaire les conteneurs de niveaux hiérarchiques inférieurs, c'est-à-dire sous forme d'un tableau ayant 9 lignes et un nombre de colonnes dépendant du niveau hiérarchique considéré et décroissant avec ce niveau hiérarchique, certaines colonnes étant incomplètes.

Par le jeu des opérations d'indexation et de justification effectuées successivement aux différents niveaux hiérarchiques, la position à l'intérieur des trames des signaux constitutifs de conteneurs donnés est donc à priori tout à fait quelconque mais déterminable, indépendamment de la complexité de traitement qui en résulte, à partir des signaux d'indexation des conteneurs considérés et des conteneurs de niveaux hiérarchiques supérieurs.

Il apparaît aussi pour les mêmes raisons, ainsi que du fait même de l'insertion d'octets d'indexation, de justification et de service à l'intérieur des trames, de même que pour des raisons de relation entre le nombre d'emplacements élémentaires par ligne susceptibles d'être occupés par des signaux constitutifs d'un conteneur de niveau hiérarchique le plus élevé, et le nombre d'unités de multiplexage de niveau immédiatement inférieur multiplexées pour former ce conteneur de niveau le plus élevé, ainsi qu'entre le nombre d'octets de justification utilisés à chaque niveau hiérarchique et le nombre d'unités de multiplexage multiplexables à ce niveau, les emplacements élémentaires alloués à des signaux constitutifs de conteneurs donnés ne sont pas reproductibles d'une ligne à l'autre des trames, ce qui constitue une gêne très importante pour des équipements de traitement de tels trains numériques, par conteneurs dits conteneurs à traiter par ces équipements.

La présente invention a pour objet une interface de restructuration de trames destinée à de tels équipements et permettant d'éviter ces inconvénients.

La présente invention a pour objet une interface de restructuration de trames pour trains numériques multiplexés par multiplexage temporel d'affluents numériques à différents débits suivant une hiérarchie de multiplexage synchrone aux différents niveaux de laquelle sont susceptibles d'être introduits des affluents et sont constituées des entités appelées conteneurs et des entités appelées unités de multiplexage, les unités de multiplexage étant formées par adjonction de signaux de justification et d'indexation à des conteneurs constitués au même niveau hiérarchique et les conteneurs étant formés suivant le cas soit de signaux multiplex issus du multiplexage d'unités de multiplexage de niveau hiérarchique inférieur, soit de signaux issus d'affluents, lesdites trames étant formées par adjonction de signaux de service soit aux unités de multiplexage constituées au niveau hiérarchique le plus élevé soit à un signal multiplex d'unités de multiplexage de niveau hiérarchique inférieur, ladite interface étant destinée à un équipement de traitement desdites trames par conteneurs dits conteneurs à traiter.

Suivant l'invention, cette interface est essentiellemnt caractérisée en ce qu'elle comporte des moyens d'extraction des trames entrantes des signaux constitutifs des conteneurs à traiter et des moyens de constitution et de multiplexage en des trames dites restructurées, découpées en sections de même longueur, d'unités de multiplexage restructurées correspondant respectivement auxdits conteneurs à traiter, par insertion des signaux constitutifs des conteneurs à traiter, ainsi que de signaux d'indexation et de justification réalisant une adaptation de leurs rythmes d'extraction et d'insertion, à des emplacements élémentaires qui, pour un même conteneur à traiter, ont à l'intérieur de chaque section de trame restructurée des rangs définis par rapport au début de la section, ces rangs étant invariables d'une section de trame à une autre et d'une trame à une autre et chaque ensemble d'emplacements de même rang des sections des trames restructurées étant affecté à au plus une unité de multiplexage restructurée.

Les objets et caractéristiques de la présente invention apparaîtront plus clairement à la lecture de la description suivante d'un exemple de réalisation faite en relation avec les dessins ci annexés dans lesquels outre les figures 1 à 6, déjà décrites,

- la figure 7 regroupe un certain nombre d'éléments communs à différents circuits utilisés dans une interface de restructuration de trames suivant l'invention,
- les figures 8A et 8B représentent respectivement un circuit de détection de signaux d'indexation d'un conteneur VC4 et un chronogramme de fonctionnement correspondant,
- les figures 9A- 9B- 9E, 9C, 9D et 10 représentent respectivement un circuit de détection de signaux d'indexation d'un conteneur VC31, un chronogramme de fonctionnement, un diagramme montrant la constitution des octets d'indexation H1VC4 et H2VC4 et un schéma illustrant le principe de localisation du premier octet d'un conteneur VC4,
- les figures 11, 12 et 13 représentent respectivement un circuit de détection de premier octet d'un conteneur VC31, un schéma illustrant le principe de localisation de cet octet et un schéma représentant l'espace occupé par un conteneur VC31 à l'intérieur de deux conteneurs VC4 successifs de niveau supérieur,
- la figure 14 est un schéma d'un circuit de détection des octets constitutifs des signaux de service P0HVC4,
- la figure 15 est un schéma d'un circuit de détection des octets constitutifs d'un conteneur VC31 à traiter, autres que le premier de ces octets, détecté conformément à la figure 11,
- la figure 16 est un schéma des moyens de constitution de trames restructurées, à partir des octets des conteneurs à traiter, extraits des trames entrantes,
- la figure 17 est un schéma montrant la structure des trames restructurées dans le cas où les conteneurs à traiter sont des conteneurs VC31,
- la figure 18 illustre l'affectation des colonnes des trames restructurées aux différentes unités de multiplexage restructurées dans le cas où les conteneurs à traiter sont des conteneurs VC31,
- les figures 19 et 20 sont des schémas illustrant l'affectation des colonnes des trames restructurées pour d'autres exemples de conteneurs à traiter.

On considère tout d'abord à titre d'exemple le cas où les conteneurs à traiter sont constitués par des conteneurs VC31, ce qui peut se produire notamment dans le cas de la structure de multiplexage considérée précédemment à titre d'exemple.

La restructuration des trames entrantes comporte tout d'abord une extraction de ces trames des signaux, ou octets, constitutifs des conteneurs VC31a, VC31b, VC31c, VC31d, qui nécessite elle-même une localisation préalable du premier octet de ces conteneurs dans ces trames. Cette localisation se décompose en une localisation des signaux d'indexation des conteneurs de niveau supérieur, VC4, qui autorise une localisation du premier octet de ces conteneurs VC4, et, les signaux d'indexation des conteneurs VC31 étant de position déterminée à l'intérieur des conteneurs VC4 ainsi localisés, une localisation de ces derniers signaux d'indexation, qui autorise à son tour une localisation du premier octet de chaque conteneur VC31.

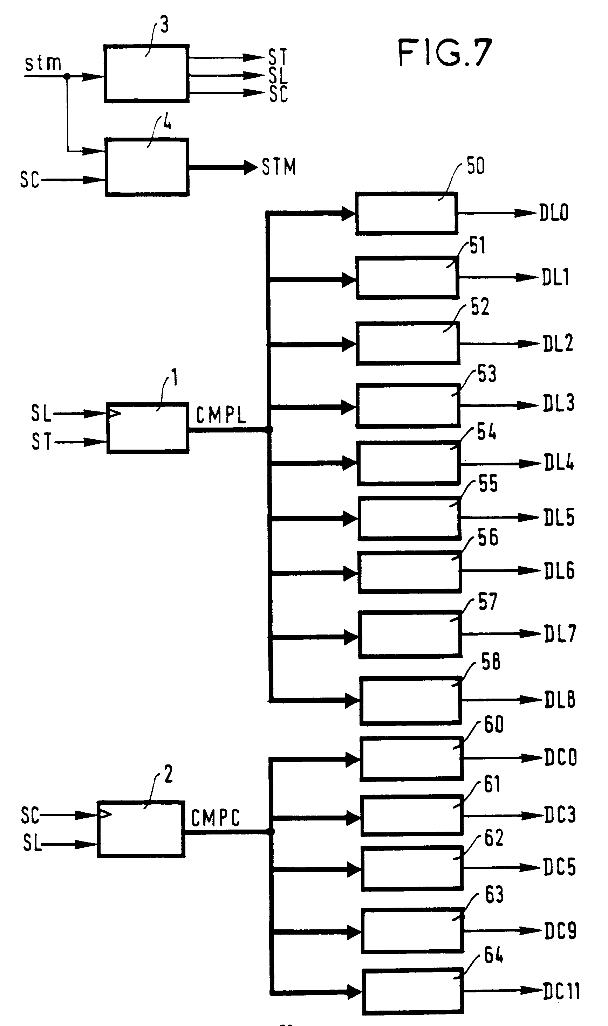

Les circuits effectuant ces différentes localisations ont en commun un certain nombre d'éléments qui sont représentés sur la figure 7, parmi lesquels un compteur 1, dit compteur de lignes, qui compte de 0 à 8 qui est incrémenté par un signal SL de synchronisation de ligne des trames incidentes et qui est remis à zéro par un signal ST de synchronisation de trame des trames incidentes, et un compteur 2, dit compteur de colonnes, qui compte de 0 à 269, qui est incrémenté par un signal SC de synchronisation de colonne des trames-incidentes et qui est remis à zéro par le signal SL de synchronisation de ligne des trames incidentes.

Les compteurs 1 et 2 délivrent sur plusieurs fils en parallèle, (ce qui a été représenté par des traits gras) des signaux référencés respectivement CMPL et CMPC indiquant les états de comptage respectifs de ces compteurs.

Les signaux ST, SL et SC sont issus d'une base de temps 3 qui reçoit en entrée les trames incidentes sous forme série, référencés "stm".

Les trames incidentes sous forme parallèle, STM, c'est-à-dire sous forme de mots successifs de huit éléments binaires, ou octets, sont obtenues en sortie d'un convertisseur série- parallèle 4 commandé par le signal SC de synchronisation de colonnne, c'est-à-dire de synchronisation d'octet, et recevant en entrée les trames incidentes sous forme série.

Sur la figure 7 sont également représentés des circuits 50, 51, 52, 53, 54, 55, 56, 57, 58 de détection de lignes 0, 1, 2, 3, 4, 5, 6, 7, 8 des trames incidentes délivrant respectivement des signaux DL0, DL1, DL2, DL3, DL4, DL5, DL6, DL7, DL8, et des circuits 60, 61, 62, 63, 64 de détection de colonnes 0, 3, 5, 9, 11 des trames incidentes, délivrant respectivement des signaux DC0, DC3, DC5, DC9, DC11.

Ces circuits sont constitués de simples décodeurs d'états des compteurs 1 et 2; les signaux qu'ils délivrent sont des signaux logiques présentant en l'occurence un niveau "1" lorsque les lignes ou colonnes concernées sont en cours sur les trames incidentes, et un niveau "0" autrement.

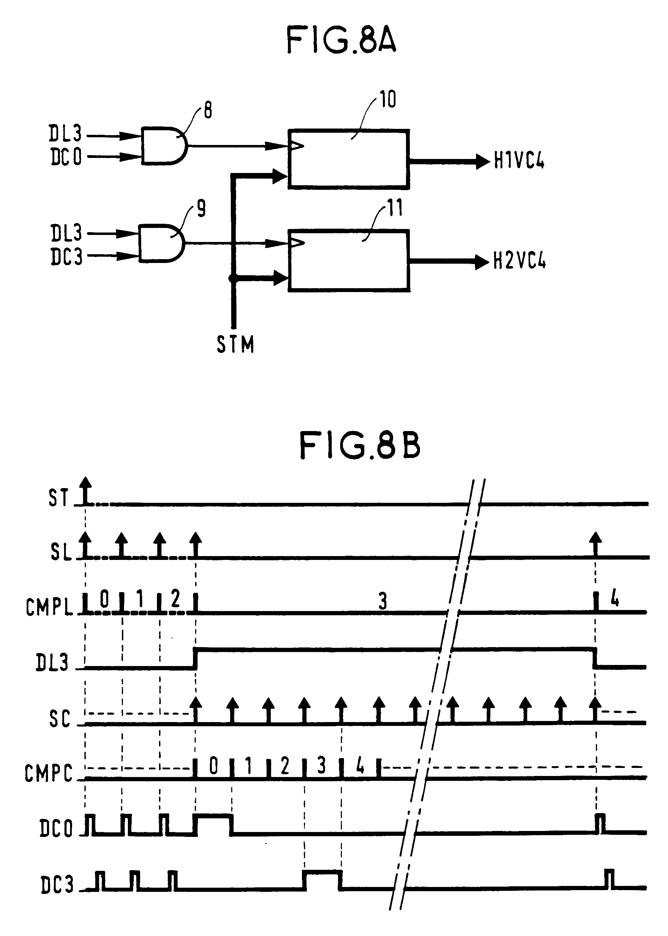

On décrit maintenant comment s'effectue la détection des signaux d'indexation H1VC4 et H2VC4 du conteneur VC4, en relation avec la figure 8A représentant le circuit mis en oeuvre et avec la figure 8B représentant un chronogramme de fonctionnement de ce circuit.

Les signaux d'indexation H1VC4 et H2VC4 étant situés respectivement en colonnes 0 et 3 de la ligne 3 des trames incidentes, ce circuit comporte un circuit 8 de détection de coïncidence entre l'état "3" du compteur de lignes et l'état "0" du compteur de colonnes et un circuit 9 de détection de coïncidence entre l'état "3" du compteur de lignes et l'état "3" du compteur de colonnes, les circuits 8 et 9 consistant en l'occurrence en des portes effectuant un "ET" logique, respectivement entre les signaux DL3 et DC0 d'une part, DL3 et DC3 d'autre part.

Les signaux logiques obtenus en sortie des portes "ET" 8 et 9 sont appliqués respectivement aux entrées d'horloge, sensibles ici à des fronts montants, de deux registres 10 et 11 qui reçoivent par ailleurs sur leurs entrées de données les trames incidentes STM, et dans lesquels sont stockés respectivement les octets H1VC4, et H2VC4, à leur apparition sur les trames incidentes.

Dans la figure 8B, on a représenté un chronogramme des signaux ST, SL, CMPL, DL3, SC, CMPC, DC0 et DC3. Pour une plus grande lisibilité de cette figure, l'échelle des temps a été dilatée pour l'état 3 du signal de sortie CMPL du compteur 1.

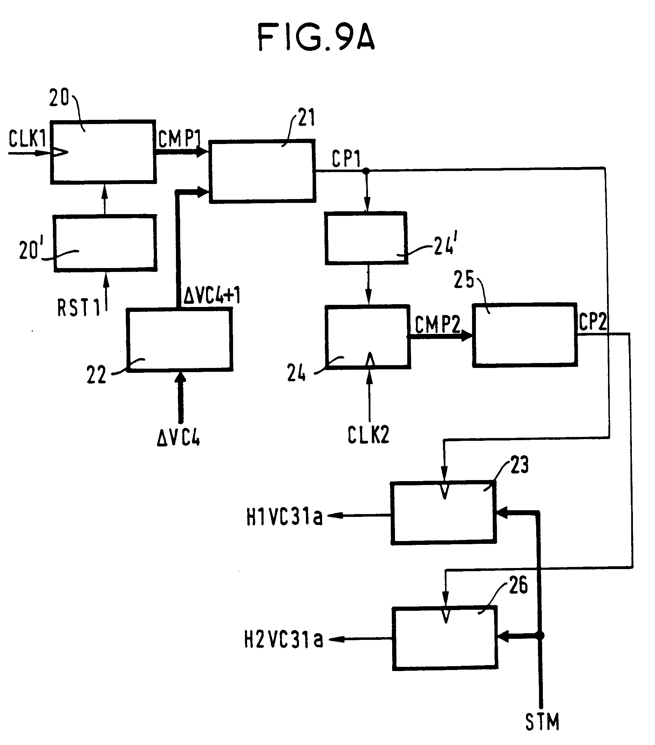

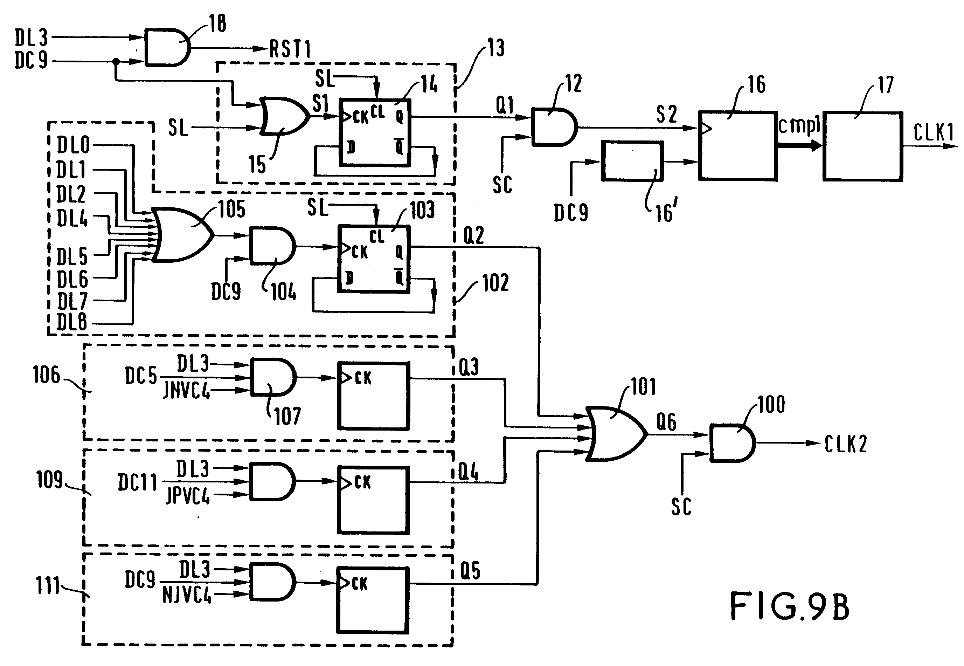

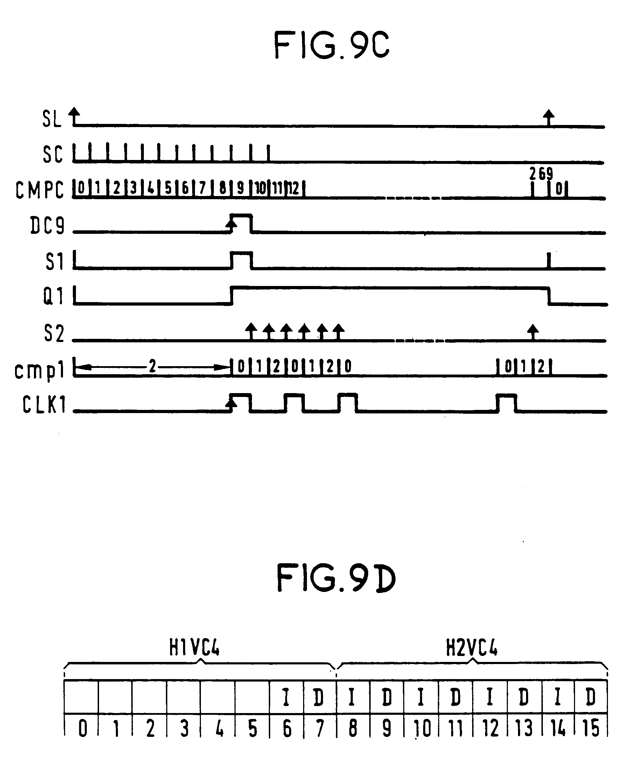

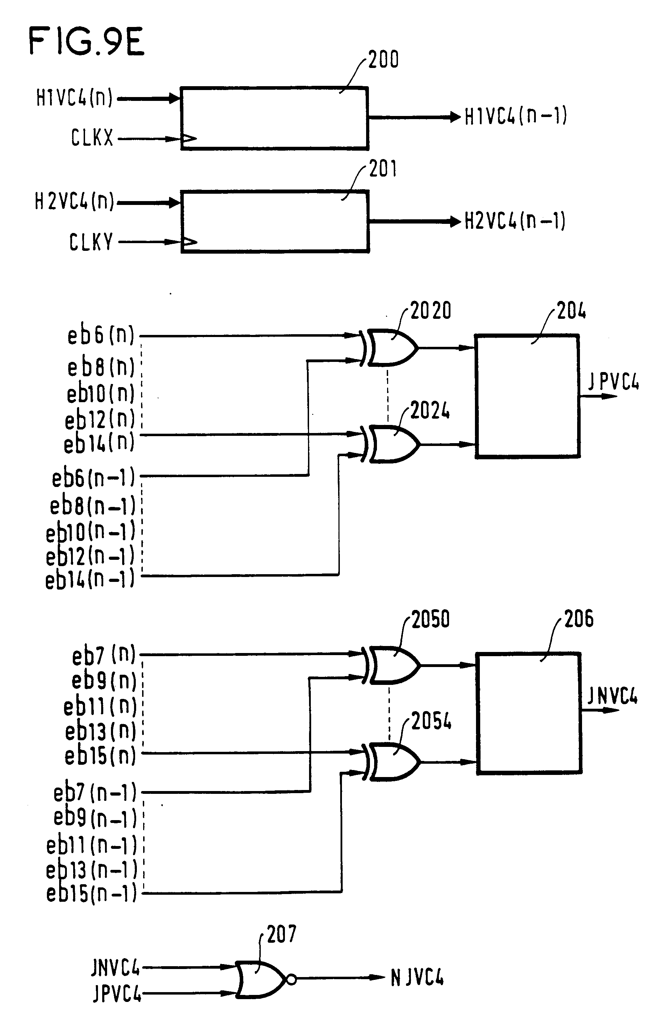

On décrit maintenant comment s'effectue la détection des signaux d'indexation des conteneurs VC31a, VC31b, VC31c et VC31d. Cette détection s'effectuant de façon analogue pour les quatre conteneurs VC31, on la décrit seulement pour l'un des conteneurs, VC31a par exemple, en relation avec les figures 9A, 9B, et 9E représentant le circuit effectuant cette détection, ainsi qu'avec les figures 4 et 5 décrites précédemment et représentant respectivement l'emplacement d'un conteneur VC4 dans les trames incidentes et la constitution d'un conteneur VC4, et avec les figures 9C représentant un chronogramme de fonctionnement, 9D montrant la constitution des octets d'indexation H1VC4, H2VC4, et 10 illustrant le principe de détection du premier octet d'un conteneur VC4.

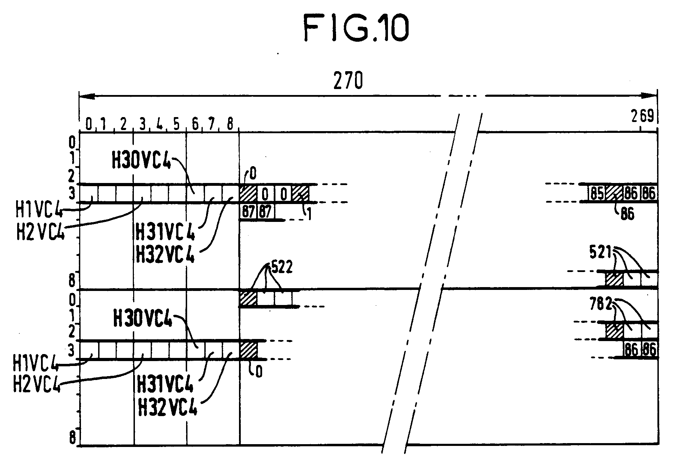

Les octets d'indexation H1VC4 et H2VC4 permettent de repérer la position du premier octet du conteneur VC4 à l'intérieur du rectangle représenté en pointillés sur la figure 4. Ils permettent plus précisément de repérer un emplacement parmi 783 emplacements possibles, repérés par des hachures sur la figure 10 et distants de trois octets, les conteneurs VC4 étant en effet justifiés par trois octets, que ce soit en justification négative ou positive. On désigne par $\Delta$VC4 la valeur, comprise entre 0 et 782, donnée par ces signaux d'indexation.

Le premier octet d'un conteneur VC4 est constitué par le premier des octets de service P0HVC4, référencé J1, comme montré sur la figure 5. Cet octet J1 est immédiatement suivi de l'octet H1VC31a, premier octet d'indexation du conteneur VC31. Le deuxième octet d'indexation du conteneur VC31a, H2VC31a, est situé dans le conteneur VC4 à un emplacement distant d'un nombre d'octets fixe après H1VC31a, en l'occurence 261 octets (soit la largeur du rectangle représenté en pointillés sur la figure 4).

Le circuit de détection d'octet H1VC31a comporte, comme représenté sur la figure 9A, un compteur 20 remis à zéro, à travers un détecteur de transitions montantes 20', par un signal référencé RST1, en ligne 3, colonne 9, des trames incidentes, soit immédiatement après l'emplacement réservé au signal de justification H32VC4, et incrémenté par un signal d'horloge CLK1 obtenu à partir du signal de synchronisation de colonne des trames incidentes en bloquant les transitions de celui-ci durant les neuf premiers emplacements élémentaires, ou temps-octet, de chaque ligne, et, à l'intérieur des transitions ainsi isolées, en n'en prenant en compte qu'une sur trois. Les différentes valeurs susceptibles d'être prises par ce compteur sont les valeurs 0 à 782 indiquées sur la figure 10.

Le signal de sortie CMP1 du compteur 20 est appliqué à un comparateur 21 qui reçoit par ailleurs la valeur $\Delta$VC4+1 issue d'un additionneur 22 ajoutant la valeur "1" à la valeur $\Delta$VC4. Lorsque la valeur du compteur 20 atteint la valeur $\Delta$VC4+1, cela signifie que l'emplacement de l'octet H1VC31a se présente alors dans la trame. Cet octet est stocké dans un registre 23 dont l'entrée d'horloge, sensible ici à des fronts montants, reçoit le signal CP1 de sortie du comparateur 21 présentant à l'instant considéré un front montant, et dont l'entrée de données reçoit les trames incidentes STM.

A cet instant le signal CP1 commande le comptage d'un compteur 24 comptant de 0 à 260 et s'autobloquant à 260. Ce compteur 24 est incrémenté par un signal d'horloge CLK2 obtenu à partir du signal SC de synchronisation de colonne des trames incidentes en bloquant ce dernier en colonnes 0 à 8 pour les lignes 0, 1, 2, 4, 5, 6, 7, 8, en colonnes 0 à 5 pour la ligne 3 si le conteneur VC4 est justifié négativement par rapport à l'unité de multiplexage AU4, en colonnes 0 à 11 pour la ligne 3 si le conteneur VC4 est justifié positivement par rapport à l'unité de multiplexage AU4, en colonnes 0 à 8 pour la ligne 3 si le conteneur VC4 n'est pas justifié par rapport à l'unité de multiplexage AU4.

En effet, comme le montre la figure 4, l'octet H1VC31a d'une trame "m" donnée pouvant être localisé à priori en toute ligne 3 à 8 de cette trame ou en toute ligne 0 à 2 de la trame "m+1" suivante, l'octet H2VC31a peut lui-même se trouver en toute ligne 4 à 8 de la trame "m" ou en toute ligne 0 à 3 de la trame "m+1". La justification du conteneur VC4 à la trame "m+1" est donc à prendre en compte dans le cas où la ligne 3 de la trame "m+1" est rencontrée au cours du comptage effectué par le compteur 24.

La détection de l'état 260 du compteur 24, dont l'état est indiqué par son signal de sortie CMP2, est effectuée par un circuit de détection 25 fournissant un signal de sortie CP2 qui présente à cet instant une transition montante et qui est appliqué à l'entrée d'horloge, sensible ici à des fronts montants, d'un registre 26 qui reçoit sur une entrée de données parallèle les trames STM, pour commander lors de l'arrivée à 260 du compteur 24, le stockage, dans ce registre 26, de l'octet des trames incidentes STM occupant l'emplacement correspondant, cet octet étant l'octet H2VC31a.

On notera que, pour la détection des signaux d'indexation des conteneurs VC31b, VC31c et VC31d, ce sont respectivement les valeurs ΔVC4 +2, ΔVC4+3 et ΔVC4+4 qui sont comparées à l'état ou valeur de comptage du compteur 20, indiqué par son signal de sortie CMP1.

On décrit maintenant, en relation avec la figure 9B, les circuits de génération des signaux CLK1, RST1 et CLK2.

Le circuit de génération du signal d'horloge CLK1 comporte un circuit 12 de prise en compte, en colonnes 9 à 269 seulement, des transitions du signal SC de synchronisation de colonne, qui reçoit d'une part ce signal SC, et d'autre part le signal Q1 de sortie d'un circuit 13 de génération de fenêtre temporelle s'étendant de la colonne 9 à la colonne 269 de chaque ligne. Ladite fenêtre temporelle étant représentée par un signal logique Q1 de niveau "1", le circuit 12 consiste en une porte "ET". Le circuit 13 consiste en une bascule de type "D" 14 qui fournit sur sa sortie Q le signal Q1 et qui reçoit sur son entrée D le signal issu de sa sortie complémentée Q̄, sur son entrée de remise à zéro CL le signal SL de synchronisation de ligne et sur son entrée d'horloge le signal S1 de sortie d'une porte "OU" 15 recevant elle-même d'une part le signal SL de synchronisation de ligne et d'autre part le signal DC9 de détection de colonne 9 des trames incidentes. Le signal 52 obtenu en sortie du circuit 12 est appliqué à l'entrée d'horloge, sensible ici à des fronts montants, d'un compteur 16 "modulo 3" qui est remis à zéro, à travers un détecteur de transitions montantes 16', par le signal DC9.

Le signal d'horloge CLK1 est obtenu en sortie d'un circuit 17 de détection d'état 0 du compteur 16, l'état de ce compteur étant indiqué par son signal de sortie cmp1.

Le circuit de génération du signal RST1 comporte un circuit de détection de coïncidence entre une ligne 3 et une colonne 9, constitué en l'occurrence par une porte "ET" 18 qui reçoit d'une part le signal DL3 et d'autre part le signal DC9.

Un chronogramme de fonctionnement de ces circuits est donné en figure 9C.

Le circuit de génération du signal CLK2 comporte un circuit 100 de prise en compte des impulsions du signal SC de synchronisation de colonne à l'intérieur d'une fenêtre temporelle représentée par un signal logique Q6 et s'étendant, pour les lignes 0, 1, 2, 4, 5, 6, 7, 8, de la colonne 9 à la colonne 269, et pour la ligne 3, soit de la colonne 6 à la colonne 269, soit de la colonne 12 à la colonne 269, soit de la colonne 9 à la colonne 269, suivant que le conteneur est justifié négativement ou positivement, ou n'est pas justifié, par rapport à l'unité de multiplexage AU4.

Les fenêtres temporelles correspondantes sont représentées par des signaux logiques Q2, Q3, Q4, Q5, de niveau "1", le circuit 100 consistant alors en une porte "ET" recevant d'une part le signal SC de synchronisation de colonnes, et d'autre part le signal Q6 issu d'une porte "OU" 101 recevant elle-même les signaux Q2, Q3, Q4, Q5.

Le signal Q2 est issu d'un circuit de génération de fenêtre temporelle 102 qui comporte une bascule 103 de type "D" dont la sortie Q fournit le signal Q2 et dont la sortie complémentée Q̄ est rebouclée sur l'entrée D, l'entrée CL de remise à zéro recevant le signal SL de synchronisation de ligne, et l'entrée d'horloge recevant le signal de sortie d'une porte "ET" 104 recevant d'une part le signal DC9 de détection de colonne 9 et d'autre part le signal de sortie d'une porte "OU" 105 recevant les signaux DL0, DL1, DL2, DL4, DL5, DL6, DL7, DL8, de détection de lignes 0, 1, 2, 4, 5, 6, 7, 8.

Le signal Q3 est de même issu d'un circuit 106 de génération de fenêtre temporelle constituée de façon analogue au circuit 102, à ceci près que la porte "ET" 104, est remplacée par une porte "ET" 107 recevant les signaux DL3 et DC5 ainsi qu'un signal JNVC4 de détection de justification négative du conteneur VC4.

Le signal Q4 est de même issu d'un circuit 109 de génération de fenêtre temporelle constitué de façon analogue au circuit 106 à ceci près que le signal JNVC4 de détection de justification négative est remplacé par un signal JPVC4 de détection de justification positive.

Le signal Q5 est de même issu d'un circuit 111 de génération de fenêtre temporelle constituée de façon analogue aux circuits 106 et 109 à ceci près que les signaux JNVC4 et JPVC4 sont remplacés par un signal NJVC4 de détection de non justification du conteneur VC4.

On décrit maintenant, en relation avec les figures 9D et 9E, les circuits de génération des signaux JNVC4, JPVC4 et NJVC4 de détection de justification négative, ou positive, ou de non justification, du conteneur VC4.

L'indication de justification négative, ou positive, ou de non justification, est donnée par les octets H1VC4 et H2VC4 dont la constitution est rappelée sur la figure 9D où les éléments binaires constitutifs de ces octets sont numérotés de 0 à 7 pour l'octet H1VC4 et de 8 à 15 pour l'octet H2VC4.

Les éléments binaires de numéros 6, 8, 10, 12 et 14, notés I, indiquent, par leur inversion d'une trame à la suivante, une justification positive.

Les éléments binaires de numéros 7, 9, 11, 13, 15, notés D, indiquent, par leur inversion d'une trame à la suivante, une justification négative.

Une absence d'inversion des éléments binaires I et D d'une trame à la suivante indique une absence de justification.

Sur la figure 9E sont représentés les circuits de génération des signaux JNVC4, JPVC4 et NJVC4.

Ces circuits comportent en commun deux registres 200 et 201 qui reçoivent sur leurs entrées de données les octets H1VC4 (n) et H2VC4 (n) relatifs à une trame "n" donnée, issus des registres 10 et 11 représentés sur la figure 8A, les entrées d'horloge de ces registres recevant les mêmes signaux d'horloge que ces registres 10 et 11, notés CLKX et CLKY. Sur les sorties de ces registres sont alors obtenus les octets H1VC4 (n-1) et H2VC4 (n-1) relatifs à la trame précédente "n-1".

La génération du signal JPVC4 est obtenue de la façon suivante. Les éléments binaires de numéros 6, 8, 10, 12, 14 des octets H1VC4 (n) et H2VC4 (n), référencés eb6(n), eb8(n), eb10(n), eb12(n), eb14(n), sont appliqués respectivement à une première entrée de cinq portes "ou exclusif" 2020 à 2024. Une deuxième entrée de ces portes "OU exclusif" reçoit les éléments binaires de numéros 6, 8, 10, 12, 14 des octets H1VC4 (n-1) et H2VC4 (n-1) référencés eb6 (n-1), eb8(n-1), eb10(n-1), eb12(n-1) et eb14(n-1). Le signal JPVC4 d'indication de justification positive est obtenu en sortie d'un circuit logique de décision majoritaire 204.

La génération du signal JNVC4 est obtenue de la façon suivante. Les éléments binaires de numéros 7, 9, 11, 13, 14, 15 des octest H1VC4(n) et H2VC4(n) référencés eb7(n), eb9(n), eb11(n), eb13(n), eb15(n) sont appliqués respectivement à une première entrée de cinq portes "ou exclusif" 2050 à 2054. Une deuxième entrée de ces portes "OU exclusif" reçoit les éléments binaires de numéros 7, 9, 11, 13, 15 des octets H1VC4 (n-1) et H2VC4(n-1), référencés eb7(n-1), eb9(n-1), eb11(n-1), eb13(n-1) eb15(n-1). Le signal JNVC4 d'indication de justification négative est obtenu en sortie d'un circuit logique 206 de décision majoritaire.

Le signal NJVC4 d'indication de non justification est obtenu en sortie d'une porte "NI" 207 recevant d'une part le signal JNVC4, d'autre part le signal JPVC4.

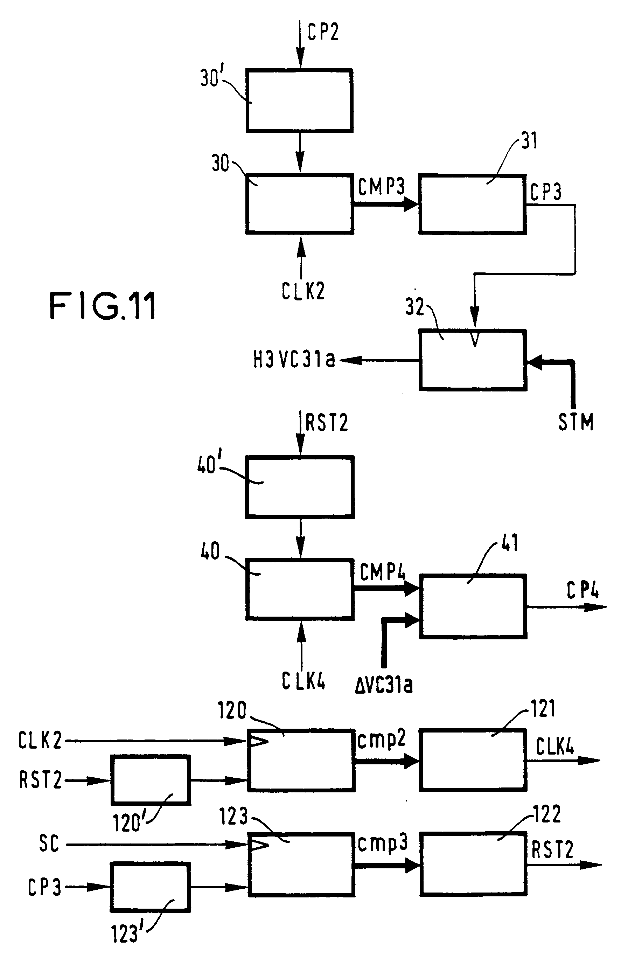

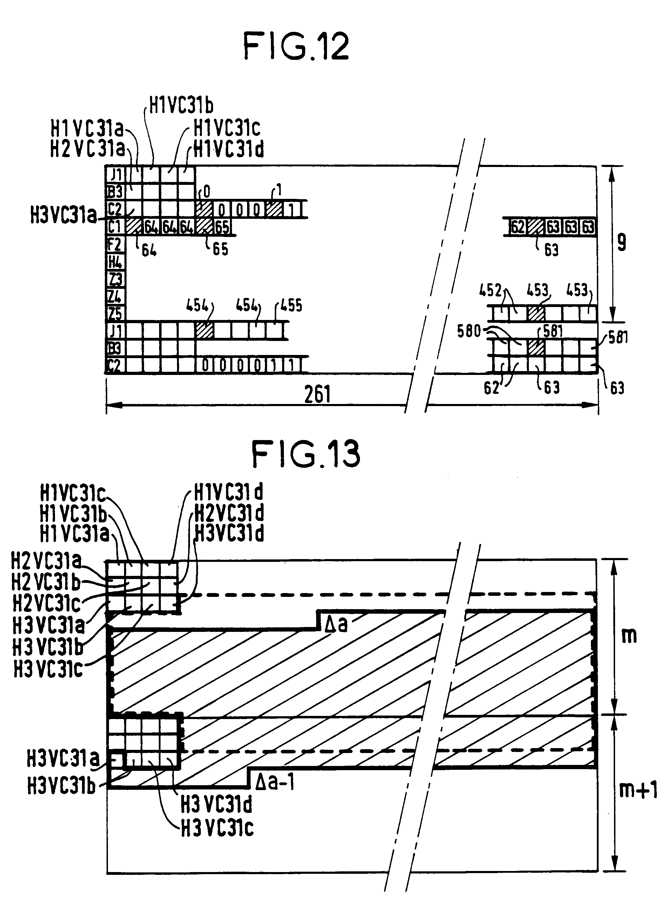

On décrit maintenant comment s'effectue la détection du premier octet du conteneur VC31a, en relation avec la figure 11 représentant le circuit mis en oeuvre, avec la figure 12 illustrant le principe de localisation de cet octet et avec la figure 13 représentant, aux réserves près qui seront indiquées par la suite, l'espace occupé par un conteneur VC31 à l'intérieur de deux conteneurs VC4 successifs , d'ordres "m" et "m+1".

Les octets d'indexation H1VC31a et H2VC31a permettent de repérer la position $\Delta a$ du premier octet du conteneur VC31a à l'intérieur de l'espace représenté en pointillés sur la figure 13, correspondant à la forme du conteneur VC31a en l'absence de toutes justifications de ce conteneur, au facteur de multiplexage par "4" près avec les autres conteneurs VC31b, VC31c, VC31d, difficilement visualisable sur cette figure. L'espace réel,c'est-à-dire en tenant compte des justifications, diffère et on a indiqué par des hachures un exemple de l'espace occupé par un conteneur VC31 à l'intérieur de deux conteneurs VC4 successifs "m" et "m+1". Dans cet exemple une justification négative intervient. Les octets d'indexation H1VC31a et H2VC31a permettent plus précisément de repérer un emplacement parmi 582 possibles, repérés par des hachures sur la figure 12 et distants de 4 octets pour tenir compte du multiplexage de quatre conteneurs VC31 et de la justification des conteneurs VC31 par un seul octet. On désignera par $\Delta$VC31a la valeur, comprise entre 0 et 581, indiquée par ces signaux d'indexation.

Une fois les octets H1VC31a et H2VC31a détectés, il est procédé à une détection de l'octet H3VC31a de justification du conteneur VC31a, au moyen d'un compteur 30 identique au compteur 24 et fonctionnant de la même façon, à ceci près qu'il est commandé par le signal de sortie CP2 du circuit de détection 25, à travers un détecteur de transition d'un sens donné 30', c'est-à-dire qu'il commence à compter de 0 à 260 à partir de la localisation de l'octet H2VC31a, l'octet H3VC31a se situant en effet 261 octets après l'octet H2VC31a, et au moyen d'un circuit 31 de détection de l'état 260 de ce compteur, dont le signal de sortie CP3 commande, lors de l'arrivée à l'état 260 du compteur 30, le stockage de l'octet correspondant H3VC31a des trames incidentes STM dans un registre 32 recevant sur ses entrées de données parallèle les trames STM et sur son entrée d'horloge le signal CP3.

Une fois les octets H1VC31a, H2VC31a et H3VC31a localisés, il est procédé à une détection du premier octet du conteneur VC31a. Pour ce faire on utilise un compteur 40 qui est remis à zéro, à travers un détecteur de transitions d'un sens donné 40′, par un signal RST2, quatre temps-octet après la détection de l'octet H3VC31a et qui est incrémenté par un signal d'horloge CLK4 obtenu à partir du signal SC de synchronisation de colonne des trames incidentes en bloquant les transitions de celui-ci en colonnes 0 à 8 pour les lignes 0, 1, 2, 4, 5, 6, 7, 8, en colonnes 0 à 5 pour la ligne 3 si le conteneur VC4 est justifié négativement par rapport à l'unité de multiplexage AU4, en colonnes 0 à 11 pour la ligne 3 si le conteneur VC4 est justifié positivement par rapport à l'unité de multiplexage AU4, en colonnes 0 à 9 pour la ligne 3 si le conteneur VC4 n'est pas justifié par rapport à l'unité de multiplexage AU4 et, à l'intérieur des transitions ainsi isolées , en n'en prenant en compte qu'une sur quatre. Les différentes valeurs susceptibles d'être prises par ce compteur correspondent aux valeurs 0 à 581 indiquées sur la figure 12.

Le signal de sortie CMP4 de ce compteur 40 est appliqué à un comparateur 41 qui reçoit par ailleurs la valeur ΔVC31a. Lorsque l'état du compteur 40, indiqué par son signal de sortie CMP4, atteint cette valeur, cela signifie que l'emplacement correspondant est celui occupé par le premier octet du conteneur VC31a. Le signal CP4 de sortie du comparateur 41 présente à cet instant une transition.

On décrit maintenant le circuit de génération du signal d'horloge CLK4 et du signal RST2.

Le signal CLK2 est appliqué à l'entrée d'horloge d'un compteur par quatre 120 qui est remis à zéro, à travers un détecteur de transition d'un sens donné 120′, par le signal RST2. Le signal cmp2 de sortie du compteur 120 est appliqué à un circuit 121 de détection d'état 0 de l'état de comptage de ce compteur. Le signal d'horloge CLK4 est obtenu en sortie du circuit 121.

Le signal RST2 est obtenu en sortie d'un circuit 122 de détection d'état de comptage 3 d'un compteur 123 qui s'autobloque à 3, l'état de ce comptage de ce compteur étant indiqué par son signal de sortie cmp3, et ce compteur étant incrémenté par le signal SC de synchronisation de colonne et remis à zéro par le signal CP3, à travers un détecteur de transitions d'un sens donné 123′.

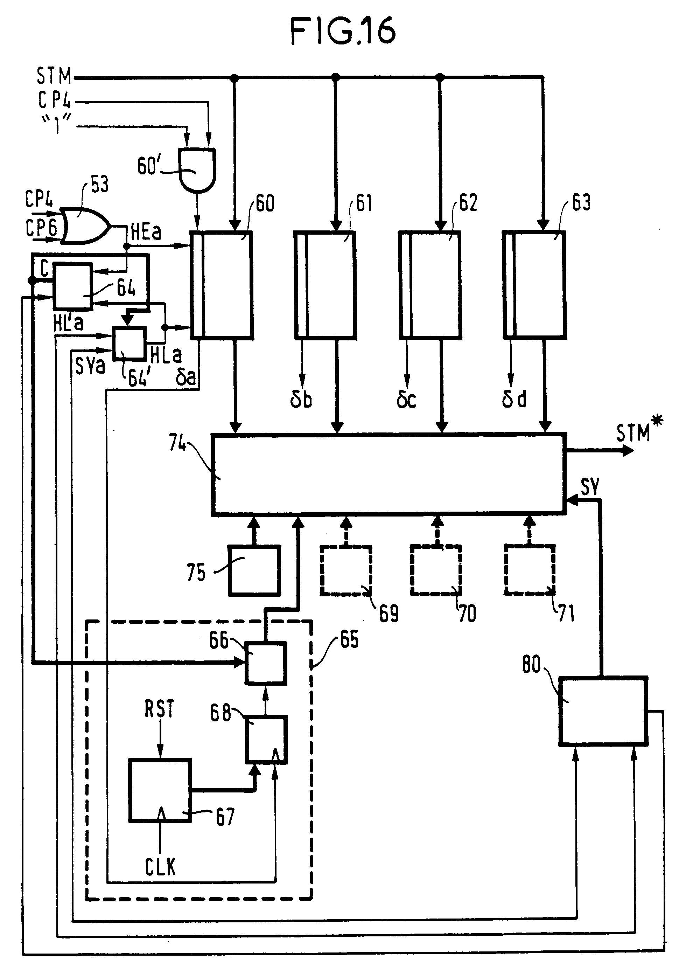

Une fois le premier octet du conteneur VC31a localisé, la localisation des octets suivants de ce conteneur se fait, ainsi qu'illustré à la figure 15, au moyen d'un compteur, référencé 50, remis à zéro, à travers un détecteur de transitions d'un sens donné 50′, par le signal CP4, à la détection du premier octet du conteneur VC31a, et comptant "modulo 4" au rythme d'un signal d'horloge CLK5 obtenu à partir du signal SC de synchronisation de colonne des trames incidentes en le bloquant, afin de ne prendre en compte que des octets constitutifs du conteneur VC31a :

- durant les colonnes 0 à 8 des lignes 0, 1, 2, 4, 5, 6, 7, 8 des trames incidentes,
- durant les colonnes 0 à 5 de la ligne 3 des trames incidentes si le conteneur VC4 est justifié négativement par rapport à l'unité de multiplexage AU4,
- durant les colonnes 0 à 11 de la ligne 3 des trames incidentes si le conteneur VC4 est justifié positivement par rapport à l'unité de mutliplexage AU4,
- durant les colonnes 0 à 8 de la ligne 3 des trames incidentes si le conteneur VC4 n'est pas justifié par rapport à l'unité de multiplexage AU4,
- durant les octets constitutifs des signaux de service P0HVC4,
- durant les octets d'indexation H1VC31 et H2VC31 des quatre conteneurs VC31.

La détection des octets suivants du conteneur VC31a se fait plus précisément au moyen d'un circuit 50″ de détection des passages à l'état 0 du compteur 50 fournissant un signal CP6, l'état de ce compteur étant indiqué par son signal de sortie cmp6.

La détection des octets H1VC31, et H2VC31 se fait de la façon qui a été décrite précédemment pour le conteneur VC31a.

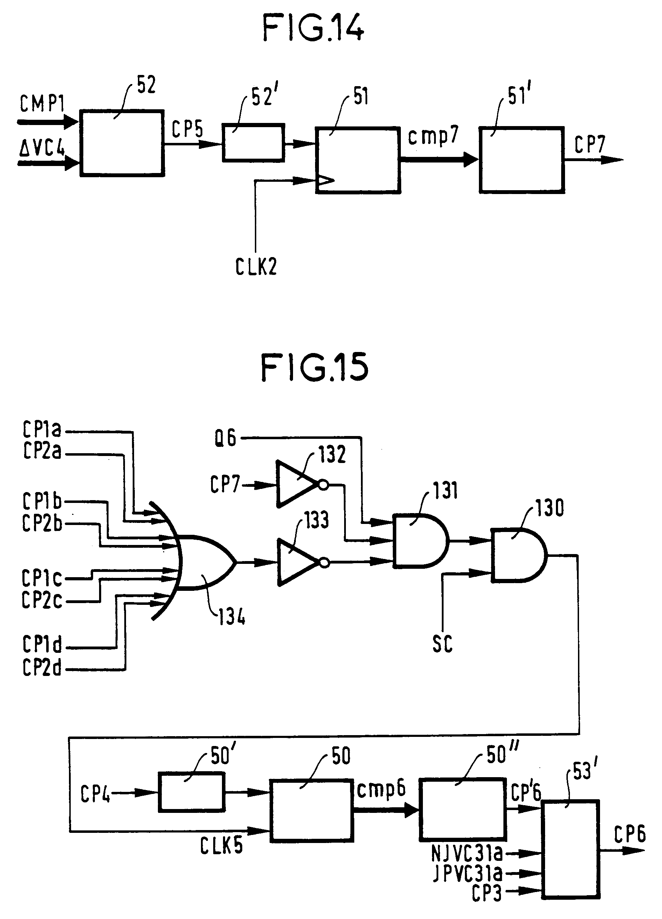

La détection des octets constitutifs des signaux de service P0HVC4 est obtenue, comme représenté sur la figure 14, par détection, au moyen d'un détecteur 51′, des huit passages par zéro successifs d'un compteur 51 comptant de 0 à 260 (nombre d'octets séparant deux octets successifs de P0HVC4 dans un conteneur VC4) au rythme du signal d'horloge CLK2, et à partir de la détection du premier octet, J1, du conteneur VC4, réalisée de façon analogue à celle décrite en relation avec la figure 9A, par détection d'égalité entre les états de comptage CMP1 du compteur 20 et la valeur ΔVC4, au moyen d'un comparateur 52 fournissant un signal de sortie CP5 présentant une transition d'un sens donné à la détection de cette égalité, et étant appliqué, à travers un détecteur de transition dudit sens donné 52′, à l'entrée de commande de remise à zéro du compteur 51 pour commander le comptage de celui-ci lors de cette détection.

On décrit maintenant, le circuit de génération du signal d'horloge CLK5.

Ce circuit comporte un circuit 130, constitué en l'occurence par une porte "ET'", de prise en compte des impulsions du signal SC de synchronisation de colonnes lorsque les conditions suivantes sont simultanément réalisées (cette simultanéité étant détectée au moyen d'une porte "ET" 131) :

- présence de l'une des fenêtres temporelles représentée par les signaux Q2, Q3, Q4, Q5 (d'où une application du signal Q6 de sortie de la porte OU 101 (figure 9B) en entrée de la porte ET 131)
- absence de détection d'un octet de P0HVC4 (d'où une application du signal CP7, inversé au moyen d'un inverseur 132, à la porte ET 131)
- absence de détection d'un octet d'indexation H1VC31 ou H2VC31 de l'un des quatre conteneurs VC31 (d'où une application en entrée de la porte ET 131 du signal, inversé, au moyen d'un inverseur 133, issu d'une porte OU 134 recevant elle-même en entrée les signaux CP1 et CP2 relatifs aux quatre conteneurs et affectés en conséquence des indices a pour le conteneur VC31a, b pour le conteneur VC31b, c pour le conteneur VC31c, d pour le conteneur VC31d).

Les octets formant le conteneur VC31a ainsi détectés et extraits des trames incidentes STM aux instants concernés sont stockés dans une mémoire-tampon 60 (représentée sur la figure 16) au fur et à mesure de leur détection, une ou deux écritures dans la mémoire-tampon 60, c'est-à-dire une ou deux impulsions du signal CP'6 de sortie du détecteur 50", étant retirées, comme décrit ci-après, suivant que le conteneur VC31a n'est pas justifié ou est justifié positivement.

La détection de non justification ou de justification positive du conteneur VC31a est obtenue de façon similaire à celle décrite plus haut pour le conteneur VC4, à partir cette fois des signaux d'indexation H1VC31a et H2VC31a constitués de la même façon que les signaux d'indexation H1VC4 et H2VC4.

Le signal CP6 est obtenu en sortie d'un circuit 53' de blocage des impulsions du signal CP'6 soit à l'emplacement de l'octet H3VC31a signalé par le signal CP3 (figure 11), ainsi que quatre temps-octets après cet emplacement, soit quatre temps-octets après cet emplacement, suivant l'état des signaux logiques NJVC31a d'indication de non justification et JPVC31a d'indication de justification positive du conteneur VC31a.

Il est procédé de même pour les trois autres conteneurs VC31b, VC31c, VC31d, dont les octets sont stockés respectivement dans trois mémoires-tampons 61, 62, 63 (figure 16).

A chaque octet constitutif d'un conteneur VC31 stocké dans ces mémoires-tampon est par ailleurs associé un élément binaire de marquage repéré respectivement δa, δb, δc, δd, pour les conteneurs VC31a, VC31b, VC31c, VC31d, et indiquant pour cet octet, s'il s'agit ou non d'un premier octet d'un conteneur.

L'inscription de cet élément binaire de marquage est commandée dans le cas du conteneur VC31a par exemple par le signal CP4 fourni par le circuit de détection de premier octet d'un conteneur VC31. L'élément binaire δa ayant dans l'exemple de réalisation décrit un niveau logique "1" lorsqu' il s'agit effectivement d'un premier octet, est obtenu en sortie d'une porte "ET" 60', recevant sur une première entrée un signal logique de niveau "1" et sur une deuxième entrée le signal CP4.

Soit HE le rythme d'extraction des trames incidentes des octets constitutifs de ces conteneurs, obtenu lui-même dans le cas du conteneur VC31a par exemple par réunion, au moyen d'une porte logique 53, des transitions du signal de sortie CP4 du comparateur 41 (figure 11) et du signal de sortie CP6 du détecteur 50" (figure 15).

L'affectation des temps-octets des trames sortantes restructurées à ces octets est fixée par une horloge HL' (HL'a dans le cas du conteneur VC31a par exemple) déterminée elle-même, dans une base de temps 80, à partir des signaux de synchronisation (de trame ST*, de ligne SL*, et de colonne SC*) des trames sortantes restructurées de manière à avoir, pour chaque conteneur à traiter, une affectation des octets constitutifs de ce conteneur par colonnes à l'intérieur des trames restructurées.

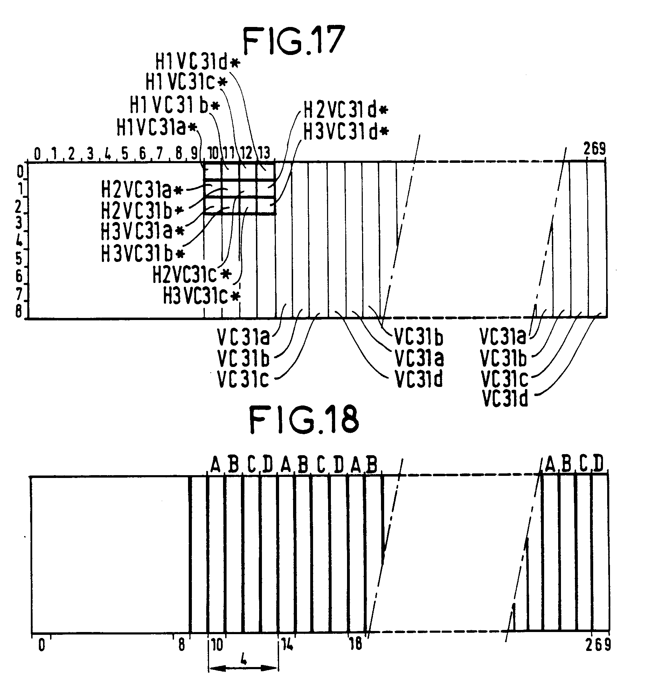

Cette affectation par colonnes est illustrée sur la figure 17 dans le cas où les conteneurs considérés sont des conteneurs VC31.

L'affectation se fait de la façon suivante :

- les colonnes 14, 18.....................266, ainsi que la colonne 10 pour les lignes 2 à 8, sont affectées au conteneur VC31a
- les colonnes 15, 19.....................267, ainsi que la colonne 11 pour les lignes 2 à 8, sont affectées au conteneur VC31b
- les colonnes 16, 20.....................268, ainsi que la colonne 12 pour les lignes 2 à 8, sont affectées au conteneur VC31c
- les colonnes 17, 21,. .....................269, ainsi que la colonne 13 pour les lignes 2 à 8, sont affectées au conteneur VC31d.

Les octets des colonnes 0 à 9 des lignes 0 à 8 sont des octets de bourrage et/ou de service.

En colonnes 10 à 13 des lignes 0 et 1 sont insérés des octets d'indexation, H1VC31*, H2VC31*, des conteneurs à traiter, affectés des indices a, b, c ou d suivant qu'ils se rapportent au conteneur VC31a, VC31b, VC31c, ou VC31d.

Les octets de justification des conteneurs à traiter dans les trames restructurées permettent d'adapter le rythme de l'horloge de lecture, HL, au rythme de l'horloge d'écriture HE des mémoires-tampons, par exemple le rythme de l'horloge de lecture HLa au rythme de l'horloge d'écriture HEa dans le cas de la mémoire-tampon 60. Cette adaptation de rythme se fait de façon classique, au moyen d'un dispositif d'élaboration de demande de justification/non justification et d'un circuit de blocage de l'horloge HL', repérés respectivement 64 et 64' dans le cas du conteneur VC31a, le dispositif d'élaboration de demande de justification/non justification procédant par comparaison de phase entre l'horloge HE et l'horloge HL issue du circuit de blocage de l'horloge HL'. Selon que le résultat de cette comparaison, pour une trame donnée, dépasse un premier seuil d'un signe donné ou un second seuil de signe opposé au premier ou se trouve entre ces deux seuils, il est élaboré pour cette trame une demande de justification positive ou négative ou une demande de non justification. Cette demande de non justification ou de justification positive ou négative est prise en compte dans la trame suivante et provoque alors, dans le premier cas, l'insertion d'un octet de bourrage à l'emplacement, fixe dans cette trame, de l'octet de justification H3VC31* correspondant, cet emplacement étant situé en colonne 10, ligne 2 dans le cas du conteneur VC31a par exemple, dans le deuxième cas, l'insertion d'un octet de bourrage à cet emplacement et à l'emplacement situé quatre temps-octet après et, dans le troisième cas, l'absence d'insertion d'octet de bourrage dans celles des colonnes 10 à 269 affectées au conteneur considéré.

La demande de justification ou non justification élaborée par le dispositif 64 pour la trame considérée y est donc mémorisée jusqu'à la trame suivante, la remise à zéro de la mémoire réalisant cette fonction, commandée par la base de temps 80, intervenant respectivement aux emplacements situés en colonnes 14, 15, 16, 17 de la ligne 2 pour les conteneurs VC31a, VC31b, VC31c, VC31d.

L'horloge de lecture HL des mémoires tampon est donc obtenue à partir de l'horloge HL'(issue elle-même de la base de temps 80 et obtenue à partir du signal de synchronisation de colonnes SC* des trames restructurées, en bloquant systématiquement ce signal de synchronisation aux emplacements d'octet non affectés au conteneur VC31 considéré et indiqués précédemment) en effectuant ou non certains blocages sur cette horloge HL' suivant l'état de demande de justification/non justification pour le conteneur VC31 pour la trame précédente.

Ainsi l'horloge de lecture HLa est obtenue à partir de l'horloge HL'a en bloquant cette dernière horloge en colonne 10 et 14 de la ligne 2 en cas de justification positive du conteneur VC31a dans les trames restructurées ou en colonne 10 de la ligne 2 en cas de non justification du conteneur VC31a dans les trames restructurées, ou en n'effectuant aucun blocage en cas de justification négative du conteneur VC31a dans les trames restructurées.

Le circuit de blocage 64' reçoit de la base de temps 80, outre l'horloge HL'a, un signal de synchronisation SYa repérant les emplacements indiqués ci-dessus, le circuit de blocage 64' reçoit également des signaux de commande C issus du dispositif d'élaboration de demande de justification/non justification 64 indiquant les demandes de justification ou de non justification du conteneur VC31a dans les trames restructurées.

La valeur, dite par la suite "calculée", des octets d'indexation H1VC31* H2VC31* à insérer en colonne 10 à 13 des lignes 0 et 1 d'une trame restructurée donnée, au cours de la formation de cette trame, est calculée, pour le conteneur VC31a par exemple, par un circuit 65 de calcul de valeur de signaux d'indexation de ce conteneur, à partir de la valeur, dite "observée", de ces octets d'indexation pour la trame précédente, déterminée au cours de la constitution de cette trame précédente (de la façon décrite ci-après) en ajoutant la valeur "1", "-1" ou "0" à cette valeur, au moyen d'un sommateur 66 recevant des signaux de commande C issus du dispositif 64, suivant qu'une demande de justification, positive, ou négative, a été faite, ou qu'aucune demande de justification n'a été faite.

La valeur "observée" des octets d'indexation est obtenue de la façon suivante, en considérant par exemple les octets H1VC31a* et H2VC31a* du conteneur VC31a.

Un compteur 67, remis à zéro par un signal RST en colonne 14 de la ligne 2 (détectée à partir des signaux de synchronisation, de trame ST*, de ligne SL*, et de colonne SC*, des trames sortantes restructurées) est incrémenté par un signal d'horloge CLK obtenu à partir du signal de synchronisation de colonne SC* des trames sortantes restructurées en prenant en compte un octet sur quatre et en le bloquant en colonnes 0 à 9 des lignes 3 à 8 et en colonnes 0 à 13 des lignes 0 à 2. Lorsqu'un premier octet d'un conteneur VC31a est détecté en sortie de la mémoire tampon 60, grâce à l'élément binaire δa de marquage correspondant, l'état de comptage de ce compteur, correspondant à la valeur recherchée, est stocké dans un registre 68 dont l'entrée d'horloge reçoit l'élément binaire δa, lu dans la mémoire tampon 60, les entrées de données de ce registre étant reliées aux sorties du compteur 67.

Les trames restructurées STM* sont obtenues en sortie d'un multiplexeur 74 dont les entrées de données sont connectées aux circuits de calcul de valeur de signaux d'indexation H1VC31* et H2VC31* (ces circuits étant reperés respectivement 65, 69, 70, 71 pour les conteneurs VC31a, VC31b, VC31c et VC31d), aux sorties des quatre mémoires-tampons 60, 61, 62, 63 de signaux constitutifs des conteneurs VC31a, VC31b, VC31c, VC31d et aux sorties d'une source 75 de signaux de bourrage et/ou de service.

Les entrées de commande du multiplexeur 74 reçoivent des signaux SY issus de la base de temps 80, permettant de réaliser une insertion des signaux d'indexation en colonnes 10, 11 12, 13 des lignes 0 et 1, une insertion de signaux de bourrage et/ou de service en colonnes 0 à 9 des lignes 0 à 8, et une insertion de signaux constitutifs des conteneurs à traiter telle que décrite ci-dessus.

Dans le cas du conteneur VC31a par exemple, l'insertion de signaux de bourrage en colonnes 10 et 14 de la ligne 2 en cas de justification positive de ce conteneur, ou en colonne 10 de la ligne 2 en cas de non justification de ce conteneur, peut être obtenue simplement par relecture d'un octet stocké dans la mémoire tampon 60, cette relecture résultant du blocage de l'horloge de lecture de cette mémoire-tampon à ces emplacements.

Sur la figure 18 est représentée l'affectation des colonnes des trames restructurées aux différentes unités de multiplexage restructurées TU31*. Soient ABCD les colonnes affectées respectivement aux unités de multiplexage restructurées TU31*a, TU31b*, TU31*c, TU31*d.

Les colonnes A sont constituées des colonnes 10, 14...............266

Les colonnes B sont constituées des colonnes 11, 15...............267

Les colonnes C sont constituées des colonnes 12, 16...............268

Les colonnes D sont constituées des colonnes 13, 17...............269

Le nombre de colonnes affectées par trame à chaque unité de multiplexage restructurée TU31* est égal au nombre d'octets affectés à l'unité de multiplexage correspondante dans une trame non restructurée, divisé par le nombre de lignes, soit $\frac{585}{9}$, égal à 65.

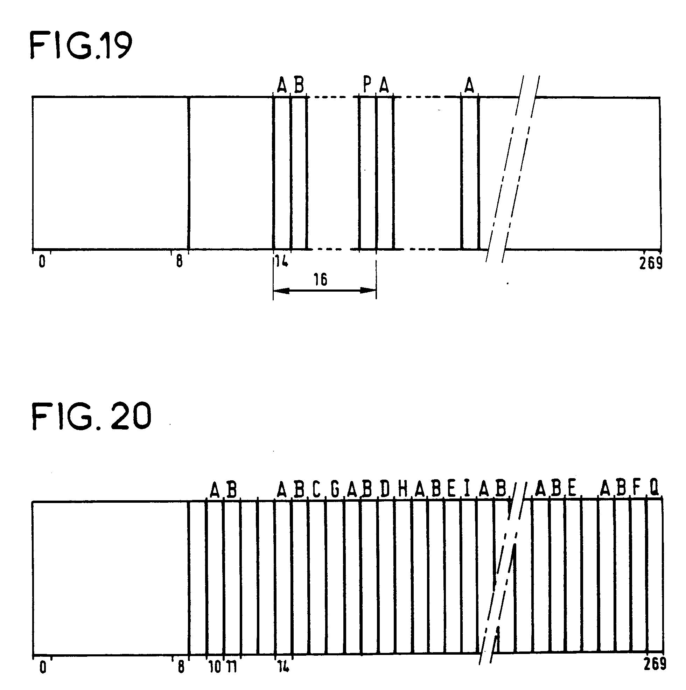

Dans le cas où les conteneurs VC4 des trames incidentes contiendraient par exemple 16 VC22 (que les conteneurs VC4 soient obtenus par multiplexage de 16 TUG22 ou par multiplexage de 4 TU31 renfermant chacun un VC31 lui-même obtenu par multiplexage de 4 TUG22 renfermant chacun un VC22) et où les conteneurs à traiter seraient tous des VC22, le nombre de colonnes ABCD.....P (représentées sur la figure 19) des trames restructurées affectées par trame à chaque unité de multiplexage restructurée TUG22* serait égal à $\frac{144}{9}$, soit 16, les quatre colonnes restantes pour aller jusqu'à 260 (en l'occurrence les colonnes 10 à 13) étant alors remplies par des octets de bourrage.

Les conteneurs à traiter pourraient également être des conteneurs constitués à différents niveaux de la hiérarchie de multiplexage.

La figure 20 illustre à titre d'exemple l'affectation des colonnes des trames restructurées aux unités de multiplexage restructurées TU31a*, TU31b*, TU22a* à TU22f*, TU11a* à TU11e*, TU12a* à TU12d* dans le cas de la structure de multiplexage décrite avec la figure 2, et où les conteneurs à traiter seraient les conteneurs VC31a, VC31b, VC22a à VC22f, VC11a à VC11e, VC12a à VC12d.

Soient ABCD ...Q les colonnes affectées respectivement à ces unités de multiplexage restructurées. Les colonnes 10 et 11 sont respectivement des colonnes A et B affectées respectivement aux unités de multiplexage restructurées TU31a* et TU31b* et contiennent par exemple en lignes 0 et 1 les octets d'indexation H1VC31a*, H1VC31b*, H2VC31a* et H2VC31b* et en ligne 2 les octets de justification H3VC31a* et H3VC31b*. Les autres unités de multiplexage restructurées étant de niveau hiérarchique inférieur, les colonnes 12 et 13 contiennent des octets de bourrage.

De la colonne 14 à la colonne 77, l'organisation en colonnes est la suivante : ABCG ABDH ABEI ABFN ABCG ABDH ABEJ ABFO ABCG ABDH ABEK ABFP ABCG ABDH ABEL ABFQ. De la colonne 78 à la colonne 141 puis de la colonne 142 à la colonne 205 et enfin de la colonne 206 à la colonne 269, cette organisation se répète à ceci près toutefois que les colonnes 89, 105, 121, 137, puis les colonnes 153, 169, 185, 201, et enfin les colonnes 217, 233, 249, 265 sont respectivement des colonnes M, I, J, K, puis des colonnes L, M, I, J et enfin des colonnes K, L, M, de bourrage, au lieu d'être des colonnes I, J, K, L comme le sont respectivement les colonnes 25, 41, 57, 73.

L'affectation des colonnes des trames restructurées aux différentes unités de multiplexage restructurées dans le cas de structures de multiplexage autres que celles envisagées ci-dessus à titre d'exemple est obtenue suivant les principes décrits ci-dessus et en fonction des valeurs numériques propres à chaque cas.

Cette affectation en colonnes permet ainsi de réaliser une insertion, dans les trames restructurées, des signaux constitutifs des conteneurs à traiter, ainsi que de signaux d'indexation et de justification pour la réalisation d'une adaptation de leurs rythmes d'extraction des trames non restructurées et d'insertion dans les trames restructurées, à des emplacements élémentaires qui, pour un même conteneur à traiter, ont à l'intérieur de chaque ligne, ou section, de trame restructurée, des rangs définis par rapport au début de la section, ces rangs étant invariables d'une section de trame à une autre et chaque ensemble d'emplacements de même rang des sections des trames restructurées étant affecté à au plus une unité de multiplexage restructurée.

**Revendications**

1. Interface de restructuration de trames pour trains numériques multiplexés par multiplexage temporel d'affluents numériques à différents débits suivant une hiérarchie de multiplexage synchrone aux différents niveaux de laquelle sont susceptibles d'être introduits des affluents et sont constituées des entités appelées conteneurs (VC) et des entités appelées unités de multiplexage (TU,AU), les unités de multiplexage étant formées par adjonction de signaux de justification et d'indexation à des conteneurs constitués au même niveau hiérarchique et les conteneurs étant formés suivant le cas soit de signaux multiplex issus du multiplexage d'unités de multiplexage de niveau hiérarchique inférieur, soit de signaux issus d'affluents, lesdites trames étant formées par adjonction de signaux de service soit aux unités de multiplexage constituées au niveau hiérarchique le plus élevé soit à un signal multiplex d'unités de multiplexage de niveau hiérarchique inférieur, ladite interface étant destinée à un équipement de traitement desdites trames par conteneurs dits conteneurs à traiter, et étant caractérisée en ce qu'elle comporte des moyens d'extraction des trames entrantes des signaux constitutifs des conteneurs à traiter et des moyens de constitution et de multiplexage en des trames dites restructurées découpées en sections de même longueur, d'unités de multiplexage restructurées correspondant respectivement auxdits conteneurs à traiter, par insertion des signaux constitutifs des conteneurs à traiter, ainsi que de signaux d'indexation et de justification réalisant une adaptation de leurs rythmes d'extraction et d'insertion, à des emplacements élémentaires qui pour un même conteneur à traiter, ont à l'intérieur de chaque section de trame restructurée des rangs définis par rapport au début de la section, ces rangs étant invariables d'une section de trame à une autre et d'une trame à une autre et chaque ensemble d'emplacements de même rang des sections des trames restructurées étant affecté à au plus une unité de multiplexage restructurée.

2. Interface selon la revendication 1, caractérisée en ce que le nombre d'emplacements élémentaires alloués par section des trames restructurées à une même unité de multiplexage restructurée est égal au nombre d'emplacements affectés à l'unité de multiplexage correspondante dans les trames non restructurées, divisé par le nombre de sections des trames restructurées.

3. Interface selon l'une des revendications 1 et 2, caractérisée en ce que les moyens d'extraction des trames incidentes des signaux constitutifs d'un conteneur à traiter, de niveau hiérarchique donné, comportent des moyens de détection d'emplacements élémentaires des trames entrantes occupés par des signaux constitutifs de ce conteneur comportant eux-mêmes

    - des moyens (50'') de détection des états de comptage de même valeur, comprise entre 0 et n, d'un compteur (50) modulo n, où n désigne le nombre de conteneurs de niveau considéré multiplexés à l'intérieur d'un conteneur de niveau hiérarchique supérieur, ou multiplexés au niveau considéré si celui-ci est le plus élevé de la hiérarchie, ce compteur étant :

    . remis à zéro par des moyens (40, 41) de détection du premier emplacement élémentaire des trames entrantes occupé par le conteneur considéré,

    . incrémenté par des moyens (130, 131, 134,) de détection d'emplacements élémentaires des trames entrantes occupés par des signaux constitutifs d'un conteneur de niveau supérieur si le niveau considéré n'est pas le niveau le plus élevé de la hiérarchie, ou par des signaux constitutifs d'une trame et non affectés aux signaux de service dans le cas contraire, à l'exception dans les deux cas de ceux occupés par les signaux d'indexation du ou des conteneurs de niveau considéré, de positions déterminées soit par rapport au premier emplacement élémentaire occupé par le conteneur de niveau supérieur, si le niveau considéré n'est pas le plus élevé de la hiérarchie, soit à l'intérieur des trames dans le cas contraire, et, lesdits signaux de justification comprenant des signaux de justification positive et des signaux de justification négative, à l'exception de ceux affectés aux signaux de justification positive et négative, ou aux signaux de justification positive, suivant que le conteneur de niveau supérieur considéré est justifié positivement ou n'est pas justifié,

    - des moyens (53') de blocage du signal d'horloge issu desdits moyens (50'') de détection d'états de comptage de même valeur, aux emplacements élémentaires affectés aux signaux de justification positive et négative du conteneur considéré, ou aux signaux de justification positive de ce conteneur, suivant que ce conteneur est justifié positivement ou n'est pas justifié.

4. Interface selon la revendication 3, caractérisée en ce que les moyens de détection d'emplacements élémentaires des trames entrantes occupés par des signaux constitutifs d'un conteneur de niveau supérieur comportent des moyens de détection des signaux constitutifs du conteneur correspondant de niveau le plus élevé, et des moyens de détection des signaux constitutifs des conteneurs correspondants de différents niveaux compris entre le niveau le plus élevé et le niveau supérieur considéré, à l'intérieur de conteneurs de niveaux respectivement supérieurs, chacun de ces moyens comportant des moyens identiques aux moyens selon la revendication 3 de détection d'emplacements élémentaires occupés par des signaux constitutifs d'un conteneur donné à l'intérieur d'un conteneur de niveau supérieur au niveau de ce conteneur.

5. Interface selon l'une des revendications 3 et 4, caractérisée en ce que, le premier emplacement élémentaire occupé par un conteneur de niveau Ni quelconque étant indiqué par le signal d'indexation de ce conteneur, de position déterminée par rapport au premier emplacement élémentaire occupé par le conteneur de niveau supérieur $N_{i+1}$ si le niveau $N_i$ n'est pas le plus élevé de la hiérarchie, ou à l'intérieur des trames dans le cas contraire, ladite position déterminée étant définie par un décalage par rapport à un emplacement élémentaire de référence, lui-même de position déterminée soit par rapport au premier emplacement élémentaire occupé par le conteneur de niveau $N_{i+1}$ si le niveau $N_i$ n'est pas le plus élevé de la hiérarchie, soit à l'intérieur des trames dans le cas contraire, les moyens de détection du premier emplacement élémentaire occupé par un conteneur de niveau $N_i$ comportent :
   - un compteur (40) remis à zéro à la détection dudit emplacement élémentaire de référence, et incrémenté tous les n emplacements élémentaires occupés par un signal constitutif d'un conteneur de niveau $N_{i+1}$, si le niveau $N_i$ n'est pas le plus élevé de la hiérarchie, ou tous les emplacements élémentaires non affectés aux signaux de service dans les trames entrantes dans le cas contraire,
   - un comparateur (41) comparant les valeurs successives issues de ce compteur à la valeur du signal d'indexation du conteneur considéré, ladite détection étant obtenue en cas d'égalité.

6. Interface selon l'une des revendications 1 à 5, caractérisée en qu'elle comporte des mémoires tampons (60, 61, 62, 63) dans lesquelles sont lus, au rythme de leur insertion dans les trames restructurées, les signaux constitutifs des conteneurs à traiter, écrits précédemment au rythme de leur extraction des trames entrantes, et, pour chaque conteneur à traiter des moyens d'élaboration de demande de justification/non justification pour une trame restructurée, par comparaison des rythmes de lecture et d'écriture de la mémoire tampon affectée à ce conteneur au cours de la formation de cette trame, déterminant les signaux de justification des conteneurs à traiter pour la trame restructurée suivante.

7. Interface selon la revendication 6, caractérisée en ce que la valeur des signaux d'indexation à insérer dans une trame restructurée donnée est obtenue à partir d'une valeur d'indexation observée au cours de la formation de la trame restructurée précédente en lui ajoutant ou en lui retranchant la valeur "1", ou la valeur "o" suivant qu'une demande de justification positive ou négative, a été détectée au cours de la formation de cette trame précédente, ou qu'aucune demande de justification n'a été détectée.

8. Interface selon la revendication 7, caractérisée en ce que la valeur d'indexation observée pour la trame restructurée précédente est obtenue en adjoignant à chaque signal constitutif d'un conteneur à traiter, stocké dans une mémoire tampon, (60, 61, 62, 63) un signal de marquage ($\delta a$, $\delta b$, $\delta c$, $\delta d$) indiquant pour ce signal s'il s'agit du premier signal de ce conteneur et en utilisant un compteur (67) incrémenté au rythme d'insertion des signaux constitutifs de ce conteneur dans les trames restructurées, ce compteur étant arrêté par la détection d'un signal de marquage en sortie de la mémoire-tampon correspondante, la valeur atteinte par ce compteur constituant alors la valeur d'indexation recherchée.

**Patentansprüche**

1. Schnittstelle zur Restrukturierung von Rahmen für mittels Zeitmultiplex von digitalen Datenströmen unterschiedlicher Durchsätze gemäß einer synchronen Multiplexierungshierarchie multiplexierte digitale Impulszüge, wobei in den verschiedenen Hierarchieebenen Datenströme eingefügt werden können, die aus Container (VC) genannten Einheiten und aus Multiplexiereinheiten (TU, AU) genannten Einheiten gebildet werden, wobei die Multiplexiereinheiten durch Beifügung von Berechtigungssignalen und Indexsignalen zu Containern gebildet werden, die in derselben hierarchischen Ebene gebildet werden, und wobei die Container entweder von Multiplexsignalen aufgrund der Multiplexierung von Multiplexiereinheiten einer niedrigeren hierarchischen Ebene oder von Signalen gebildet werden, die aus Datenströmen stammen, wobei die Rahmen durch Beifügung von Dienstsignalen entweder zu den Multiplexiereinheiten gebildet werden, die auf der höchsten hierarchischen Ebene gebildet wurden, oder zu einem Multiplexsignal von Multiplexiereinheiten einer niedrigeren hierarchischen Ebene gebildet werden, wobei die Schnittstelle für eine Einrichtung zur Bearbeitung der Rahmen je Container bestimmt ist, die zu bearbeitende Container genannt werden, dadurch gekennzeichnet, daß die Schnittstelle Mittel zur Entnahme der die zu bearbeitenden Container bildenden Signale aus den ankommenden Rahmen und Mittel zur Bildung und Multiplexierung von restrukturierten Multiplexiereinheiten entsprechend den zu bearbeitenden Containern in Form der restrukturierten Rahmen aufweist, die in Sektionen gleicher Länge aufgeteilt sind, und zwar durch Einfügung der die zu bearbeitenden Container bildenden Signale sowie von Index- und Berechtigungssignalen, durch die eine Anpassung ihrer Entnahme- und Einfügungsrhythmen an elementaren Stellen realisiert wird, die für einen gegebenen zu bearbeitenden Container innerhalb jeder Sektion eines restrukturierten Rahmens definierte Ränge bezüglich des Beginns der Sektion besitzen, wobei diese Ränge von einer Rahmensektion zur anderen und von einem Rahmen zum anderen invariabel sind und jede Gruppe von Stellen gleichen Rangs der Sektionen der restrukturierten Rahmen höchstens einer restrukturierten Multiplexiereinheit zugeordnet ist.

2.  Schnittstelle nach Anspruch 1, dadurch gekennzeichnet, daß die Anzahl der Elementarstellen, die je Sektion der restrukturierten Rahmen einer gleichen restrukturierten Multiplexiereinheit zugewiesen sind, der Anzahl von Stellen entspricht, die der entsprechenden Multiplexiereinheit in den nicht restrukturierten Rahmen geteilt durch die Anzahl von Sektionen der restrukturierten Rahmen zugewiesen sind.

3.  Schnittstelle nach einem der Ansprüche 1 und 2, dadurch gekennzeichnet, daß die Mittel zur Entnahme der einen zu behandelnden Container bildenden Signale einer gegebenen hierarchischen Ebene in den ankommenden Rahmen Mittel zur Erfassung der Elementarstellen der ankommenden Rahmen, die von den diesen Container bildenden Signalen besetzt werden, aufweisen, die ihrerseits enthalten:
    - Mittel (50″) zur Erfassung der Zählzustände gleichen Werts zwischen 0 und n in einem Zähler (50) modulo n, wobei n die Anzahl von innerhalb eines Containers einer höheren hierarchischen Ebene multiplexierten Containern einer gegebenen Ebene oder die Anzahl von in der betrachteten Ebene multiplexierten Containern bezeichnet, wenn diese die höchste hierarchische Ebene ist, wobei dieser Zähler
        . durch Mittel (40, 41) auf Null gesetzt wird, die die erste elementare Stelle der ankommenden Rahmen, die von den betrachteten Containern besetzt wird, erfassen,
        . durch Mittel (130, 131, 134) inkrementiert wird, die die elementaren Stellen der ankommenden Rahmen erfassen, die von den einen Container einer höheren Ebene bildenden Signalen besetzt sind, wenn die betrachtete Ebene nicht die höchste hierarchische Ebene ist, oder die die Elementarstellen der ankommenden Rahmen erfassen, die von den einen Rahmen bildenden Signalen besetzt sind und nicht den Dienstsignalen zugewiesen sind, mit Ausnahme in den beiden Fällen von Stellen, die von Indexsignalen des oder der Container der betrachteten Ebene an Stellen besetzt sind, die entweder bezüglich der ersten Elementarstelle bestimmt sind, die vom Container der höheren Ebene besetzt ist, wenn die betrachtete Ebene nicht die höchste Ebene der Hierarchie ist, oder die innerhalb der Rahmen im gegenteiligen Fall bestimmt sind, und wobei die Berechtigungssignale positive und negative Berechtigungssignale enthalten, mit Ausnahme von denen, die den positiven und negativen Berechtigungssignalen zugeordnet sind oder den positiven Berechtigungssignalen, je nachdem, ob der Container der betrachteten höheren Ebene positiv berechtigt ist oder nicht berechtigt ist,
    - Mittel (53′) zur Blockierung des Taktsignals aus den Mittel (50″) zur Erfassung der Zählzustände gleichen Werts an den elementaren Stellen, die den positiven und negativen Berechtigungssignalen des betrachteten Containers oder den positiven Berechtigungssignalen dieses Containers zugeordnet sind, je nachdem, ob der Container positiv berechtigt oder nicht berechtigt ist.

4.  Schnittstelle nach Anspruch 3, dadurch gekennzeichnet, daß die Mittel zur Erfassung der elementaren Stellen der ankommenden Rahmen, die von den einen Container einer höheren Ebene bildenden Signalen besetzt sind, Mittel zur Erfassung der den Container entsprechend der höchsten Ebene bildenden Signale und Mittel zur Erfassung der die Container entsprechend verschiedener Ebenen zwischen der höchsten Ebene und der betrachteten höheren Ebene innerhalb von Containern von jeweils höheren Ebenen aufweisen, wobei jedes dieser Mittel gleiche Mittel wie die Mittel gemäß Anspruch 3 zur Erfassung der elementaren Stellen aufweist, die von einen gegebenen Container innerhalb eines Containers einer höheren Ebene als dieser Container bildenden Signalen besetzt werden.

5. Schnittstelle nach einem der Ansprüche 3 und 4, dadurch gekennzeichnet, daß die erste von einem Container einer beliebigen Ebene Ni besetzte Elementarstelle durch das Indexsignal dieses Containers an einer bestimmten Stelle bezüglich der ersten Elementarstelle des Containers der höheren Ebene $N_{i+1}$ bezeichnet ist, wenn die Ebene $N_i$ nicht die höchste Hierarchieebene ist, oder im entgegengesetzten Fall innerhalb der Rahmen, wobei die bestimmte Stelle durch eine Verschiebung bezüglich einer elementaren Bezugsstelle definiert ist, die ihrerseits entweder bezüglich der ersten Elementarstelle, die von dem Container der Ebene $N_{i+1}$ besetzt wird, wenn die Ebene $N_i$ nicht die höchste Hierarchieebene ist, oder im gegenteiligen Fall innerhalb der Rahmen bestimmt ist, und daß die Mittel zur Erfassung der ersten Elementarstelle, die von einem Container einer Ebene $N_i$ besetzt wird, einen Zähler (40), der bei Erfassung der elementaren Bezugsstelle auf Null gesetzt wird und nach jeder n-ten von einem einen Container der Ebene $N_{i+1}$ bildenden Signal besetzten Elementarstelle inkrementiert wird, wenn die Ebene $N_i$ nicht die höchste Hierarchieebene ist, oder im gegenteiligen Fall bei allen nicht den Dienstsignalen in den ankommenden Rahmen zugewiesenen Elementarstellen inkrementiert wird, und einen Komparator (41) aufweisen, der die aufeinanderfolgenden Ausgangswerte dieses Zählers mit dem Wert des Indexsignals des betrachteten Containers vergleicht und das Vergleichsergebnis im Fall der Gleichheit anzeigt.

6. Schnittstelle nach einem der Ansprüche 1 bis 5, dadurch gekennzeichnet, daß sie Pufferspeicher (60, 61, 62, 63) enthält, in denen im Rhythmus ihrer Einfügung in die restrukturierten Rahmen die die zu behandelnden Container bildenden Signale ausgelesen werden, die vorher im Rhythmus ihrer Entnahme aus den ankommenden Rahmen eingeschrieben worden waren, und daß für jeden zu behandelnden Container Mittel zur Erarbeitung von Berechtigungs-/Nichtberechtigungsanfragen für einen restrukturierten Rahmen durch Vergleich der Lese- und Schreibrhythmen des diesem Container zugeordneten Pufferspeichers während der Bildung dieses Rahmens vorgesehen sind, die die Berechtigungssignale der für den nächsten restrukturierten Rahmen zu behandelnden Container bestimmen.

7. Schnittstelle nach Anspruch 6, dadurch gekennzeichnet, daß der Wert der Indexsignale, die in einen gegebenen restrukturierten Rahmen einzufügen sind, ausgehend von einem während der Bildung des vorhergehenden restrukturierten Rahmens beobachteten Indexwerts erhalten wird, indem diesem Wert der Wert 1 oder der Wert 0 hinzugefügt oder abgezogen wird, je nachdem, ob eine positive oder negative Berechtigungsanfrage während der Bildung des vorhergehenden Rahmens erfaßt worden ist oder ob überhaupt keine Berechtigungsanfrage festgestellt wurde.

8. Schnittstelle nach Anspruch 7, dadurch gekennzeichnet, daß der beobachtete Indexwert für den vorhergehenden restrukturierten Rahmen erhalten wird, indem jedem einen zu behandelnden Container bildenden Signal, das in einem Pufferspeicher (60, 61, 62, 63) gespeichert ist, ein Markiersignal ($\delta a$, $\delta b$, $\delta c$, $\delta d$) hinzugefügt wird, das für dieses Signal angibt, ob es sich um das erste Signal dieses Containers handelt, und indem ein Zähler (67) verwendet wird, der im Rhythmus der Einfügung der diesen Container in den restrukturierten Rahmen bildenden Signale inkrementiert wird und bei Erfassung eines Markiersignals am Ausgang des entsprechenden Pufferspeichers angehalten wird, wobei der erreichte Zählerwert der gesuchte Indexwert ist.

**Claims**

1. Frame restructuring interface for digital bit streams multiplexed by time-division multiplexing digital tributaries at different bit rates according to a synchronous multiplexing hierarchy at the various levels of which tributaries can be introduced and constituted by entities called hereinafter containers (VC) and entities called hereinafter multiplexing units (TU, AU), the multiplexing units being formed by adding justification and indexing signals to containers constituted at the same hierarchy level and the containers being formed as appropriate either of multiplex signals obtained by multiplexing lower hierarchy level multiplexing units or signals from tributaries, said frames being formed by adding service signals either to the multiplexing units constituted at the highest hierarchy level or to a multiplex signal of lower hierarchy level multiplexing units, said interface being intended for equipment for processing said frames by containers referred to hereinafter as containers to be processed and being characterised in that it comprises means for extracting from the incoming frames the signals constituting said containers to be processed and means for constituting and for multiplexing into restructured frames subdivided into sections of the same length restructured multiplexing units respectively representing said containers to be processed, by inserting signals constituting said containers to be processed and indexing and justification signals for adapting their extraction and insertion timing rates at locations which for a given container to be processed have within each restructured frame section ranks defined relative to the start of the section, said ranks being invariant from one frame section to another and from one frame to another and each set of same ranked locations of said restructured frame sections being assigned to at most one restructured multiplexing unit.

2. Interface according to claim 1 characterised in that the number of locations allocated per restructured frame section to the same restructured multiplexing unit is equal to the number of locations assigned to the corresponding multiplexing unit in the non-restructured frames divided by the number of restructured frame sections.

3. Interface according to claim 1 or claim 2 characterised in that said means for extracting from the incoming frames the signals constituting a container to be processed, of a given hierarchy level, comprise means for detecting locations of the incoming frame occupied by signals constituting said container and themselves comprising:

- means (50″) for detecting count states of the same value between 0 and $n$ of a modulo $n$ counter (50) where $n$ designates the number of containers of given level multiplexed within a higher hierarchy level container or multiplexed at the level in question if the latter is the highest hierarchy level, said counter being:

. reset to zero by means (40, 41) for detecting the first location of the incoming frames occupied by the container in question,

. incremented by means (130, 131, 134) for detecting locations of incoming frames occupied by signals constituting a higher level container if the level in question is not the highest hierarchy level or by signals constituting a frame and not assigned to service signals otherwise, except in the case of those occupied by the indexing signals of the container or containers of the level in question, at specific positions either relative to the first location occupied by the higher level container, if the level in question is not the highest hierarchy level, or within the frames otherwise, and, said justification signals comprising positive justification signals and negative justification signals, except for those assigned to the positive and negative justification signals, or to the positive justification signals, according to whether the higher level container in question is positive justified or not justified,

- means (53′) for blocking the clock signal from said means (50″) for detecting same value count states at the locations assigned to the positive and negative justification signals of the container in question or to the positive justification signals of said container according to whether said container is positive justified or not justified.

4. Interface according to claim 3 characterised in that the means for detecting locations of incoming frames occupied by signals constituting a higher level container comprise means for detecting signals constituting the corresponding higher level container and means for detecting signals constituting corresponding containers of different levels between the highest level and the higher level in question, within containers of respective higher levels, each of said means comprising means identical to the means in accordance with claim 3 for detecting locations occupied by signals constituting a given container within a higher level container.

5. Interface according to claim 3 or claim 4 characterised in that the first location occupied by a container of any level Ni being indicated by the indexing signal of said container at a specific position relative to said first location occupied by the container of higher level $N_{i+1}$, if the level $N_i$ is not the highest hierarchy level, or within the frames otherwise, said specific position being defined by an offset relative to a reference location at a specific position relative to the first location occupied by the level $N_{i+1}$ container if the level $N_i$ is not the highest hierarchy level, or within the frame otherwise, the means for detecting the first location occupied by a level $N_i$ comprise:

- a counter (40) reset to zero on detection of said reference location and incremented every $n$ locations occupied by a signal constituting a level $N_{i+1}$ container, if the level $N_i$ is not the highest hierarchy level, or all the locations not assigned to service signals in the incoming frames otherwise, and

- a comparator (41) comparing the successive values from said counter with the value of the indexing signal of the container in question, said detection being operative in the event of coincidence.

6. Interface according to any one of claims 1 through 5 characterised in that it comprises buffers (60, 61, 62, 63) in which are read at the timing rate they are inserted into the restructured frames the signals constituting said containers to be processed, previously written at the timing rate at which they are extracted from the incoming frame, and, for each container to be processed, means for generating justification/non-justification requests for a restructured frame by comparing the read and write timing rates of the buffer assigned to said container during the formation of said frame and determining the justification signals of the containers to be processed for the next restructured frame.

7. Interface according to claim 6 characterised in that the value of the indexing signals to be inserted into a given restructured frame is obtained from an indexing value observed during the formation of the previous restructured frame by adding to it or subtracting from it the value "1" or the value "0" according to whether a positive or negative justification request or no justification request has been detected during the formation of said previous frame.

8. Interface according to claim 7 characterised in that the indexing value observed for the previous restructured frame is obtained by adding to each signal constituting a container to be processed, stored in a buffer (60, 61, 62, 63), a marking signal ($\delta a$, $\delta b$, $\delta c$, $\delta d$) indicating for said signal whether it is the first signal of said container and using a counter (67) incremented at the timing rate for inserting signals constituting said container into the restructured frames, said counter being halted on detecting a marking signal at the output of the corresponding buffer, the value reached by said counter then constituting the required indexing value.

# FIG.1

AU-32 — VC-32 ◁ — C-32 — 44 736 kbits/s

×7

TU-21 | VC-21 ◁ — C-21 — 6 312 kbits/s

TU-32 ◁— TUG-21 ◁ ×4

N3    ×3    ×3    TU-11 | VC-11 ◁ — C-11 — 1 544 kbits/s

STM ◁ — AU-4 | VC-4 ◁ — ×21 — C-4 — 139 264 kbits/s

×16

×4    N1    ×5    TU-12 | VC-12 ◁ — C-12 — 2 048 kbits/s

×4    TU-31    TUG-22 ◁ — ×4

N2    TU-22 | VC-22 ◁ — C-22 — 8 448 kbits/s

×4

AU-31 ◁ — VC-31 ◁ — C-31 — 34 368 kbits/s

EP 0 440 128 B1

# FIG.2

# FIG.3

H1VC4
H2VC4
H32VC4
H31VC4
H30VC4

# FIG.5

H1VC31b
H1VC31a
H1VC31c
H1VC31d
H2VC31d
J1
H2VC31c
H2VC31b
H2VC31a
H3VC31a
H3VC31b
H3VC31c
H3VC31d
POHVC4

# FIG.6

# FIG.4

FIG.7

EP 0 440 128 B1

# FIG.8A

# FIG.8B

# FIG.9A

FIG.9B

CLK1 · CLK2 · cmpl · S2 · SC · Q1 · Q2 · Q3 · Q4 · Q5 · Q6 · SL · S1 · RST1 · DC9 · DL3 · DC9 · DL0 · DL1 · DL2 · DL4 · DL5 · DL6 · DL7 · DL8 · DC5 · DL3 · JNVC4 · DC11 · DL3 · JPVC4 · DC9 · DL3 · NJVC4 · CK · CL · D · Q

12 · 13 · 14 · 15 · 16 · 16' · 17 · 18 · 100 · 101 · 102 · 103 · 104 · 105 · 106 · 107 · 109 · 111

# FIG.9C

# FIG.9D

# FIG.9E

# FIG.10

FIG.11

# FIG.12

# FIG.13

# FIG.14

# FIG.15

# FIG.16

## FIG.17

H1VC31d✱
H1 VC31c✱
H1 VC31 b✱
H1VC31a✱

H2VC31d✱
H3VC31d✱

0 1 2 3 4 5 6 7 8 9 10 11 12 13                                    269

0
1    H2VC31a✱
2    H2VC31b✱
3    H3VC31a✱
4    H3VC31b✱
5
6    H2VC31c✱
7    H3VC31c✱
8

VC31a          VC31b          VC31a
VC31b          VC31a          VC31b
VC31c          VC31d          VC31c
                              VC31d

## FIG.18

A B C D A B C D A B          A B C D

0          8  10        14        18                        269
              |←—— 4 ——→|

# FIG.19

```
        A B      P A        A
   0        8    14              269
              |←—— 16 ——→|
```

# FIG.20

```
            A B    A B C G A B D H A B E I A B   A B E  A B F Q
   0        8  10 11  14                                    269
```